# EUROPEAN PATENT APPLICATION

(11) **EP 3 379 362 A1**
(43) Date of publication of application: **26.09.2018**
(21) Application number: 18160908.2
(22) Date of filing: 09.03.2018
(51) Int. Cl.: G05D 1/00

(54) **METHOD FOR DETERMINING MOVEMENT LOCATION BASED ON MOVEMENT OF EXTERNAL OBJECT AND ELECTRONIC DEVICE FOR THE SAME**

(30) Priority: 22.03.2017 KR 20170036249
(71) Applicant: Samsung Electronics Co., Ltd., Suwon-si, Gyeonggi-do 16677 (KR)
(72) Inventor: KIM, Jongho, Suwon-si, Gyeonggi-do (KR); LEE, Yun Woo, Anyang-si, Gyeonggi-do (KR); CHOI, Kyonggon, Yongin-si, Gyeonggi-do (KR)
(74) Representative: HGF Limited

(57) **Abstract**

An electronic device may include a communication module, a memory storing instructions, and one or more processors coupled to the communication module. The one or more processors may be configured to execute the instructions to receive information related to a movement of an external electronic device from the external electronic device by using the communication module, determine a range of moving the electronic device, at least on the basis of the information related to the movement, determine a location to which the electronic device is moved, at least on the basis of the range, and move the electronic device to the location.

## Description

### BACKGROUND

### 1. Field of the Disclosure

The present disclosure relates generally to a method and apparatus for determining a movement location of an electronic device.

### 2. Description of the Related Art

With the development of digital technologies in recent years, various types of electronic devices, such as a mobile communication terminal, a personal digital assistant (PDA), an electronic organizer, a smart phone, a tablet personal computer (PC), or a wearable device, are widely used. Electronic devices are persistently improved in hardware and/or software to support and enhance functions.

In addition, an unmanned aerial vehicle (UAV), may be remotely controlled by being wirelessly connected to a remote controller (RC) (e.g., the electronic device). A user may take a picture while controlling the UAV by using the RC.

The UAV uses a camera image capturing function to capture a subject (e.g., a user), and a subject tracking technique which tracks the user. The conventional subject tracking technique performs a function of tracking the user by using image recognition behind the user. Therefore, the conventional UAV is insufficient for performing functions other than capturing a back side of the user and a guard function.

This limited functionality is problematic because, if the UAV tracks the user, it may be difficult for the UAV to inform the user of a danger in advance or to deliver information to a user's front-side (e.g., a front selfie and movement location prediction) and to perform the guide function. In addition, if the UAV is moved by using information measured in an electronic device carried by the user, there may be a problem in that the UAV suddenly needs to change its movement location due to an error of measurement information. In this case, the UAV may experience a sudden acceleration or deceleration of a propeller, which leads to an increase in noise of the propeller or an increase in battery consumption.

### SUMMARY

The present disclosure has been made to address at least the above-mentioned disadvantages and to provide at least the advantages described below.

Accordingly, an aspect of the present disclosure provides a method and apparatus for determining a location to which a UAV (unmanned aerial vehicle) moves in front of a user on the basis of information related to a movement of an electronic device carried by a user.

According to an aspect of the present disclosure, a UAV can be moved ahead of a user depending on a movement location of the user while maintaining a specific distance to the user.

According to an aspect of the present disclosure, since a UAV can be located in front of a user, a picture of the user can be taken from a front side, and danger information, guidance information, and front-side information can be provided to the user.

According to an aspect of the present disclosure, since a location to which a UAV moves is determined on the basis of accuracy of GPS information and sensor information acquired in an electronic device of a user, the location can be selected more accurately.

According to an aspect of the present disclosure, since a movement location is more accurately selected to move a UAV ahead of a user instead of following after the user, the UAV can operate reliably, and battery consumption of the UAV can be saved.

In accordance with an aspect of the present disclosure, an electronic device includes a communication module, a memory storing instructions, and one or more processors coupled to the communication module. The one or more processors may be configured to execute the instructions to receive information related to a movement of an external electronic device from the external electronic device by using the communication module, determine a range of moving the electronic device, at least on the basis of the information related to the movement, determine a location to which the electronic device is moved, at least on the basis of the range, and move the electronic device to the location.

In accordance with an aspect of the present disclosure, a method of an electronic device includes receiving information related to a movement of an external electronic device from the external electronic device, determining a range of moving the electronic device, at least on the basis of the information related to the movement, determining a location to which the electronic device is moved, at least on the basis of the range, and moving the electronic device to the location.

In accordance with an aspect of the present disclosure, a non-transitory computer-readable storage medium includes a program for executing a method of an electronic device including receiving information related to a movement of an external electronic device from the external electronic device, determining a range of moving the electronic device, at least on the basis of the information related to the movement, determining a location to which the electronic device is moved, at least on the basis of the range, and moving the electronic device to the location.

### BRIEF DESCRIPTION OF THE DRAWINGS

The above and other aspects, features, and advantages of the present disclosure will be more apparent from the following detailed description when taken in conjunction with the accompanying drawings, in which:
FIG. 1 illustrates a first electronic device in a network environment, according to an embodiment of the present disclosure;
FIG. 2 is a block diagram illustrating a structure of a first electronic device, according to an embodiment of the present disclosure;
FIG. 3 is a block diagram illustrating a program module, according to an embodiment of the present disclosure;
FIG. 4 illustrates an external structure of a second electronic device, according to an embodiment of the present disclosure;
FIG. 5 illustrates a structure of a second electronic device, according to an embodiment of the present disclosure;
FIG. 6A and FIG. 6B illustrate a platform structure of a second electronic device, according to an embodiment of the present disclosure;
FIG. 7 illustrates an example of determining a movement location of a second electronic device, according to an embodiment of the present disclosure;
FIG. 8 is a flowchart illustrating a method of operating a second electronic device, according to an embodiment of the present disclosure;
FIG. 9 is a flowchart illustrating a method of determining a movement location of a second electronic device by interworking with a first electronic device, according to an embodiment of the present disclosure;
FIG. 10 is a flowchart illustrating a method of determining a movement range in a second electronic device, according to an embodiment of the present disclosure;
FIG. 11A to FIG. 11D illustrate examples of determining a movement range of a second electronic device, according to an embodiment of the present disclosure;
FIG. 12 is a flowchart illustrating a method of determining a movement range in a second electronic device on the basis of a distance with respect to a first electronic device, according to an embodiment of the present disclosure; and
FIG. 13 and FIG. 14 are flowcharts illustrating a method of determining a movement range in a second electronic device, according to an embodiment of the present disclosure.

### DETAILED DESCRIPTION

Embodiments of the present disclosure are described with reference to the accompanying drawings. It should be understood that it is not intended to limit various embodiments and terms of the present disclosure to a particular form but, on the contrary, the intention is to cover various modifications, equivalents, and/or alternatives of the embodiments of the present disclosure. The same or similar components may be designated by the same or similar reference numerals although they are illustrated in different drawings. Detailed descriptions of constructions or processes known in the art may be omitted to avoid obscuring the subject matter of the present disclosure.

In the present disclosure, the singular forms of terms include plural forms of the terms unless the context clearly dictates otherwise. In the present disclosure, expressions such as "A or B," "at least one of A and B," or "one or more of A and B" may include all possible combinations of the listed items.

In the present disclosure, expressions such as "first," "second," "primarily," or "secondary," as used herein, may represent various elements regardless of order and/or importance and do not limit corresponding elements. The expressions may be used for distinguishing one element from another element. When a first element is "operatively coupled to", "communicatively coupled to" or "connected to" a second element, the first element can be directly connected to the second element or can be connected through a third element.

In the present disclosure, the expressions "configured to" or "set to" may be used interchangeably with "suitable for," "having the capacity to," "designed to," "adapted to," "made to," or "capable of'. Alternatively, in some situations, the expression "apparatus configured to" may refer to when the apparatus "can" operate together with another apparatus or component. For example, the phrase "a processor configured to perform A, B, and C" may refer to a dedicated processor, a generic-purpose processor (such as a central processing unit (CPU) or an application processor (AP)) that can perform a corresponding operation by executing at least one software program stored at an exclusive processor (such as an embedded processor) or memory device for performing a corresponding operation.

An electronic device according to various embodiments of the present disclosure, may be at least one of a smart phone, a tablet PC, a mobile phone, a video phone, an e-book reader, a desktop PC, a laptop PC, a netbook computer, a workstation, a server, a PDA, a portable multimedia player (PMP), an MPEG 3 (MP3) player, medical equipment, a camera, and a wearable device. The wearable device can include at least one of an accessory type device (e.g., a watch, a ring, a bracelet, an ankle bracelet, a necklace, glasses, a contact lens, or a head-mounted-device (HMD)), a fabric or clothing embedded type device (e.g., electronic garments), a body attachable type device (e.g., a skin pad or a tattoo), and an implantable circuit. The electronic device can include as at least one of a television, a digital versatile disc (DVD) player, an audio device, a refrigerator, an air-conditioner, a cleaner, an oven, a microwave oven, a washing machine, an air cleaner, a set-top box, a home automation control panel, a security control panel, a media box (e.g., Samsung HomeSync™, Apple TV™, or Google TV™), a game console (e.g., Xbox™ or PlayStation™), an electronic dictionary, an electronic key, a camcorder, and an electronic frame.

The electronic device can include as at least one of various portable medical measuring devices (such as a blood sugar measuring device, a heartbeat measuring device, a blood pressure measuring device, or a body temperature measuring device), a magnetic resonance angiography (MRA) device, a magnetic resonance imaging (MRI) device, a computed tomography (CT) device, a scanning machine, and an ultrasonic wave device, a navigation device, a global navigation satellite system (GNSS), an event data recorder (EDR), a flight data recorder (FDR), a vehicle infotainment device, electronic equipment for ship (such as a navigation device for a ship and a gyro compass), an avionics device, a security device, a head unit for a vehicle, an industrial or home robot, a drone, an automated teller machine (ATM) of a financial institution, a point of sales (POS) device of a store, and an Internet of things (IoT) device (e.g., a light bulb, various sensors, a sprinkler device, a fire alarm, a thermostat, a street light, a toaster, sports equipment, a hot water tank, a heater, and a boiler).

The electronic device can include at least one of a portion of furniture or a building/construction, a vehicle, an electronic board, an electronic signature receiving device, a projector, and various measuring devices (e.g., water supply, electricity, gas, or electric wave measuring device). An electronic device can be a flexible electronic device or a combination of two or more of the foregoing various devices. An electronic device is not limited to the foregoing devices. The term "user", as used herein, can refer to a person using an electronic device or a device using an electronic device (e.g., an artificial intelligence electronic device).

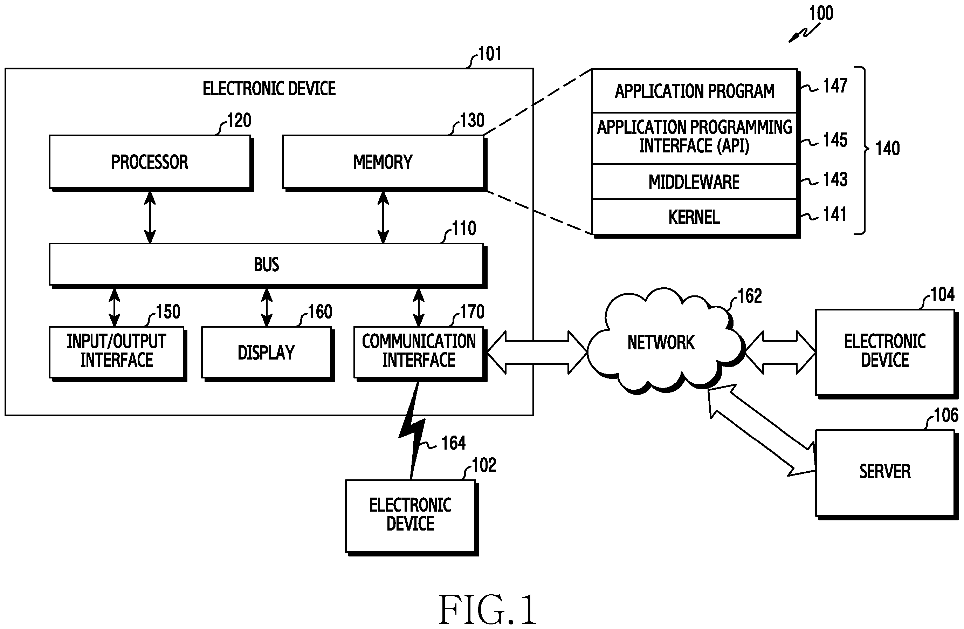

FIG. 1 illustrates a first electronic device in a network environment, according to an embodiment of the present disclosure.

Referring to FIG. 1, an electronic device 101 resides in a network environment 100. The electronic device 101 includes a bus 110, a processor (e.g., including processing circuitry) 120, a memory 130, an input/output interface (e.g., including input/output interface circuitry) 150, a display 160, and a communication interface (e.g., including communication circuitry) 170. The electronic device 101 can be provided without at least one of the components, or can include at least one additional component. The bus 110 can include a circuit for connecting the components 120 through 170 and delivering communication (e.g., control messages or data) therebetween. The processor 120 may include various processing circuitry, such as, for example, one or more of a dedicated processor, a CPU, an AP, and a communication processor (CP). The processor 120 can perform an operation or data processing with respect to control and/or communication of at least another component of the electronic device 101.

The memory 130 can include a volatile and/or nonvolatile memory and can store commands or data associated with at least another component of the electronic device 101. The memory 130 can store software and/or a program 140 including a kernel 141, middleware 143, an application programming interface (API) 145, and/or an application program (or application) 147. At least part of the kernel 141, the middleware 143, or the API 145 can be referred to as an operating system (OS). The kernel 141 can control or manage system resources (e.g., the bus 110, the processor 120, or the memory 130) used for performing operations or functions implemented by the other programs (e.g., the middleware 143, the API 145, or the application program 147). Additionally, the kernel 141 can provide an interface for controlling or managing system resources by accessing an individual component of the electronic device 101 from the middleware 143, the API 145, or the application program 147.

The middleware 143 can serve an intermediary role for exchanging data between the API 145, the application program 147 and the kernel 141. Also, the middleware 143 can process one or more job requests received from the application program 147, based on their priority. The middleware 143 can assign a priority for using a system resource (e.g., the bus 110, the processor 120, or the memory 130) of the electronic device 101 to the application program 147, and process the one or more job requests. The API 145, as an interface through which the application 147 controls a function provided from the kernel 141 or the middleware 143, can include at least one interface or function (e.g., an instruction) for file control, window control, image processing, or character control. The input/output interface 150 can deliver commands or data inputted from a user or another external device to other component(s) of the electronic device 101, or output commands or data inputted from the other component(s) of the electronic device 101 to the user or another external device.

The display 160 can include a liquid crystal display (LCD), a light emitting diode (LED) display, an organic light emitting diode (OLED) display, a micro electro mechanical systems (MEMS) display, or an electronic paper display. The display 160, for example, can display various contents (e.g., texts, images, videos, icons, and/or symbols) to the user. The display 160 can include a touch screen and receive touch, gesture, proximity, or hovering inputs by using an electronic pen or a user's body part. The communication interface 170 can set a communication between the electronic device 101 and an external device (e.g., a first external electronic device 102, a second external electronic device 104, or a server 106). The communication interface 170 can communicate with the external device (e.g., the second external electronic device 104 or the server 106) over a network 162 through wireless communication or wired communication. Additionally, or alternatively, the communication interface 170 can establish a short-range wireless communication connection with an electronic device (e.g., the first external electronic device 102).

The wireless communication can include cellular communication using at least one of long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM). The wireless communication can include at least one of wireless fidelity (WiFi), bluetooth, bluetooth low energy (BLE), zigbee, near field communication (NFC), magnetic secure transmission, radio frequency (RF), and body area network (BAN). The wireless communication can include GNSS that may include a global positioning system (GPS), a global navigation satellite system (GLONASS), a Beidou navigation satellite system (Beidou), or Galileo (the European global satellite-based navigation system). Hereafter, the term GPS can be interchangeably used with the term GNSS. The wired communication can include at least one of a universal serial bus (USB), a high definition multimedia interface (HDMI), a recommended standard 232 (RS-232), power line communications, and plain old telephone service (POTS). The network 162 can include a telecommunications network, such as at least one of a local area network (LAN), a wide area network (WAN), Internet, and a telephone network.

Each of the first and second external electronic devices 102 and 104 can be of the same as or of a different type from that of the electronic device 101. All or part of operations executed in the electronic device 101 can be executed by another electronic device or a plurality of electronic devices (e.g., the electronic device 102 or 104, or the server 106). To perform a function or service automatically or by request, instead of performing the function or the service by the electronic device 101, the electronic device 101 can request at least part of a function relating thereto from another device. The other electronic device can perform the requested function or an additional function and send its result to the electronic device 101. The electronic device 101 can provide the requested function or service by processing the received result using cloud computing, distributed computing, or client-server computing techniques.

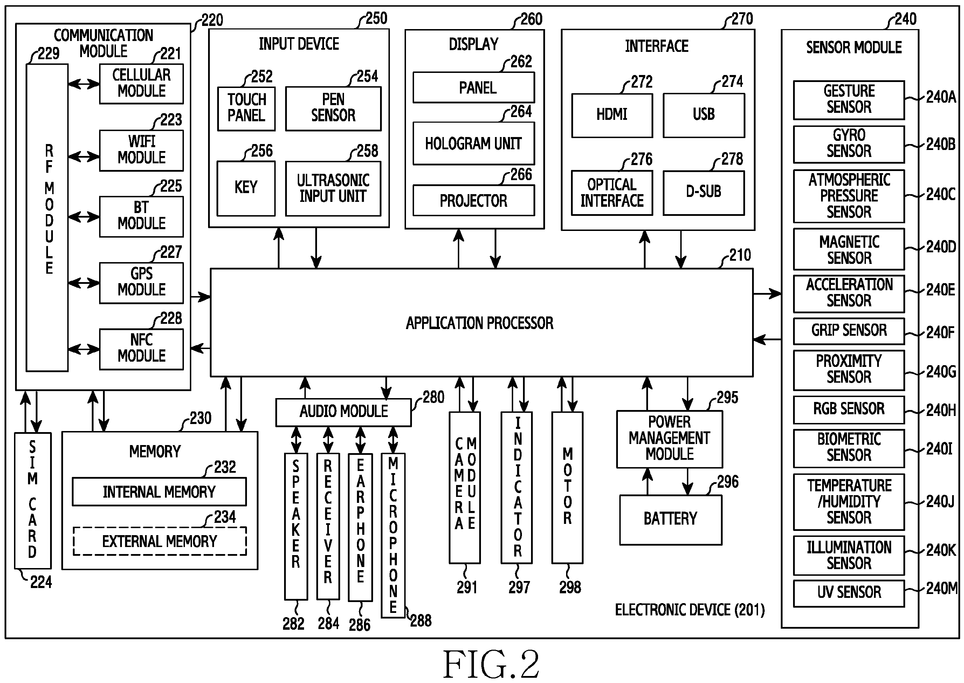

FIG. 2 is a block diagram of an electronic device, according to an embodiment of the present disclosure.

Referring to FIG. 2, an electronic device 201 may include the entire or part of the electronic device 101 illustrated in FIG. 1. The electronic device 201 may include one or more processors (e.g., APs) 210, a communication module 220, a subscriber identification module (SIM) 224, a memory 230, a sensor module 240, an input device 250, a display 260, an interface 270, an audio module 280, a camera module 291, a power management module 295, a battery 296, an indicator 297 and a motor 298.

The processor 210 may drive an OS or an application program to control a majority of hardware or software constituent elements coupled to the processor 210, and may perform various data processing and operations. The processor 210 may be implemented as a system on chip (SoC) and may further include a graphic processing unit (GPU) and/or an image signal processor (ISP). The processor 210 may include at least some (e.g., cellular module 221) of the constituent elements illustrated in FIG. 2 as well. The processor 210 may load a command or data received from at least one of the other constituent elements (e.g., non-volatile memory), to a volatile memory, to process the loaded command or data, and store the result data in the non-volatile memory.

The processor 210 may control at least a partial function of a light emitting unit and/or light receiving unit of a spectrometric sensing apparatus based on at least one mode. The processor 210 may control the light emitting unit to selectively output light of a wavelength band corresponding to the at least one mode. The light emitting unit may include a majority of light sources for respectively outputting light of mutually different wavelength bands, and the processor 210 may selectively activate at least one of the majority of light sources based on the at least one mode as well. The processor 210 may selectively activate at least a part of at least one region of the light receiving unit based on the at least one mode. The processor 210 may acquire information related to the at least one mode based on light that is acquired through the light receiving unit, and display the acquired information through the display 260. The processor 210 may acquire the information related with the at least one mode based on the light that is acquired through the light receiving unit, and transmit the acquired information to another electronic device through the communication module 220.

The communication module 220 may have the same or a similar construction as the communication interface 170. The communication module 220 may include a cellular module 221, a WiFi module 223, a bluetooth module 225, a GNSS module 227, a near field communication (NFC) module 228, and an RF module 229. The cellular module 221 may provide voice telephony, video telephony, a text service, an Internet service through a telecommunication network. The cellular module 221 may perform the distinction and authentication of the electronic device 201 within the telecommunication network, by using the SIM card 224. The cellular module 221 may perform at least some functions among functions that the processor 210 provides. The cellular module 221 may include a CP. At least two or more of the cellular module 221, the WiFi module 223, the bluetooth module 225, the GNSS module 227 or the NFC module 228 may be included within one integrated chip (IC) or IC package. The RF module 229 may transmit or receive an RF signal and may include a transceiver, a power amplifier module (PAM), a frequency filter, a low noise amplifier (LNA), or an antenna. At least one of the cellular module 221, the WiFi module 223, the bluetooth module 225, the GNSS module 227 or the NFC module 228 may transmit or receive an RF signal through a separate RF module. The SIM 224 may include a card including a SIM and/or an embedded SIM. The SIM 224 card may include unique identification information (e.g., integrated circuit card identifier (ICCID)) or subscriber information (e.g., international mobile subscriber identity (IMSI)).

The memory 230 may include an internal memory 232 or an external memory 234. The internal memory 232 may include at least one of a volatile memory (e.g., a dynamic random access memory (DRAM), a static RAM (SRAM), or a synchronous dynamic RAM (SDRAM)) and a non-volatile memory (e.g., a one time programmable read only memory (OTPROM), a programmable ROM (PROM), an erasable PROM (EPROM), an electrically EPROM (EEPROM), a mask ROM, a flash ROM, a flash memory, a hard drive or a solid state drive (SSD)). The external memory 234 may include a flash drive, such as a compact flash (CF), a secure digital (SD), a micro-SD, a mini-SD, an extreme Digital (xD), a multi media card (MMC), or a memory stick. The external memory 234 may be operatively or physically coupled with the electronic device 201 through various interfaces.

The sensor module 240 may measure a physical quantity or sense an activation state of the electronic device 201, to convert measured or sensed information into an electrical signal. The sensor module 240 may, for example, include at least one of a gesture sensor 240A, a gyro sensor 240B, a barometer 240C, a magnetic sensor 240D, an acceleration sensor 240E, a grip sensor 240F, a proximity sensor 240G, a color sensor 240H (e.g., a red, green, blue (RGB) sensor), a medical sensor 240I, a temperature/humidity sensor 240J, an illuminance sensor 240K or an ultra violet (UV) sensor 240M. Additionally or alternatively, the sensor module 240 may include an E-nose sensor, an electromyography (EMG) sensor, an electroencephalogram (EEG) sensor, an electrocardiogram (ECG) sensor, an infrared (IR) sensor, an iris scan sensor and/or a finger scan sensor. The sensor module 240 may further include a control circuit for controlling at least one or more sensors belonging therein. The electronic device 201 may further include a processor configured to control the sensor module 240 as a part of the processor 210 or separately, thereby controlling the sensor module 240 while the processor 210 is in a sleep state.

A spectrometric sensing apparatus may include at least a part of at least one optical sensor (e.g., the gesture sensor 240A, the proximity sensor 240G or the RGB sensor 240H) of the sensor module 240. The spectrometric sensing apparatus may use a light emitting unit of the sensor module 240 that has at least one light source for outputting light of at least one wavelength band. The spectrometric sensing apparatus may include a light receiving unit of the sensor module 240 that has at least one region for receiving light of at least one wavelength band.

The input device 250 may include a touch panel 252, a digital pen sensor 254, a key 256 or an ultrasonic input device 258. The touch panel 252 may use at least one scheme among a capacitive overlay scheme, a pressure sensitive scheme, an infrared beam scheme or an ultrasonic scheme. Also, the touch panel 252 may further include a control circuit and a tactile layer, to provide a tactile response to a user. The digital pen sensor 254 may be a part of the touch panel 252, or include a separate sheet for recognition. The key 256 may include a physical button, an optical key or a keypad. The ultrasonic input device 258 may sense an ultrasonic wave generated in an input tool, through a microphone 288, to confirm data corresponding to the sensed ultrasonic wave.

The display 260 may include a panel 262, a hologram device 264, a projector 266, and/or a control circuit for controlling them. The panel 262 may be implemented to be flexible, transparent, or wearable. The panel 262 may be constructed as one or more modules together with the touch panel 252. The hologram device 264 may show a three-dimensional image to the user using an interference of light in air. The projector 266 may project light onto a screen to display an image. The screen may be located inside or outside the electronic device 201. The interface 270 may include an HDMI 272, a USB 274, an optical interface 276 or a D-subminiature (D-sub) 278. The interface 270 may be included in the communication interface 170 illustrated in FIG. 1. Additionally or alternatively, the interface 270 may include a mobile high-definition link (MHL) interface, an SD card/MMC interface or an Infrared Data Association (IrDA) standard interface.

The audio module 280 may convert a sound to an electrical signal or convert an electrical signal to a sound. At least some constituent elements of the audio module 280 may be included in the input output interface 150 illustrated in FIG. 1. The audio module 280 may process sound information that is input or output through a speaker 282, a receiver 284, an earphone 286, or the microphone 288. The camera module 291 is a device able to photograph a still image and a video. The camera module 291 may include one or more image sensors (e.g., a front sensor or a rear sensor), a lens, an image signal processor (ISP) or a flash (e.g., an LED or a xenon lamp).

The power management module 295 may manage the electric power of the electronic device 201. The power management module 295 may include a power management integrated circuit (PMIC), a charger IC or a battery gauge. The PMIC may employ a wired and/or wireless charging scheme. The wireless charging scheme may include a magnetic resonance scheme, a magnetic induction scheme, or an electromagnetic wave scheme. The wireless charging scheme may further include a supplementary circuit for wireless charging, such as a coil loop, a resonance circuit, or a rectifier. The battery gauge may, for example, measure a level of the battery 296, a voltage, an electric current or a temperature. The battery 296 may include a rechargeable battery and/or a solar battery.

The indicator 297 may display a specific state, such as a booting state, a message state, or a charging state of the electronic device 201 or a part (e.g., processor 210) of the electronic device 201. The motor 298 may convert an electrical signal into a mechanical vibration, and may generate a vibration or a haptic effect. The electronic device 201 may include a mobile TV support device (e.g., GPU) capable of processing media data according to the standards of digital multimedia broadcasting (DMB), digital video broadcasting (DVB), or mediaFlo™.

Each of the constituent elements described in the present disclosure may consist of one or more components, and a name of the corresponding constituent element may be varied according to the kind of electronic device. In various embodiments, the electronic device 201 may omit some constituent elements, or further include additional constituent elements, or combine some of the constituent elements to configure one entity, but identically perform functions of corresponding constituent elements before combination.

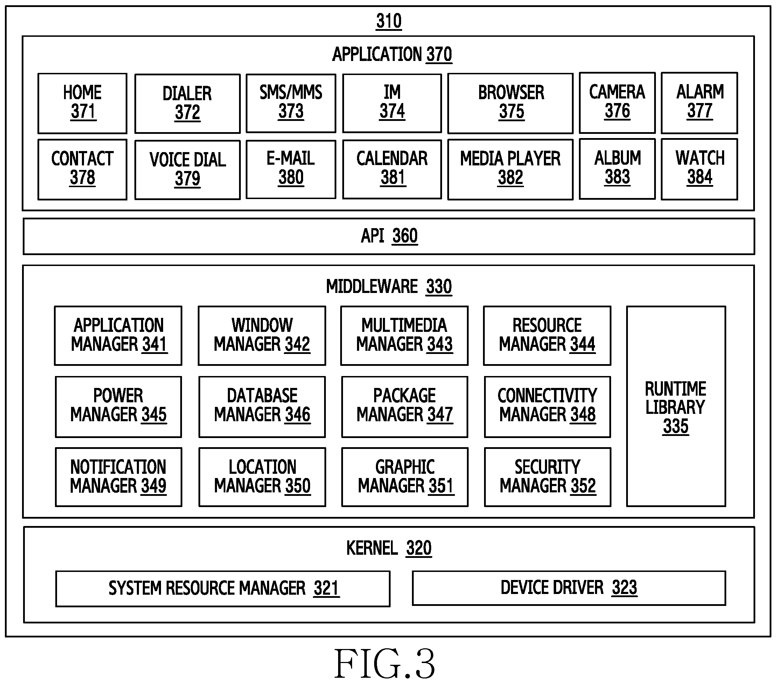

FIG. 3 is a block diagram illustrating a program module 310, according to an embodiment of the present disclosure.

Referring to FIG. 3, the program module 310 may include an OS for controlling resources related to the electronic device 101 and/or the application program 147 executed in the OS. The OS may be Android™, iOS™, Windows™, Symbian™, Tizen™, or Bada™.

The program module 310 may include a kernel 320, middleware 330, an API 360, and/or an application 370. At least some of the program module 310 may be preloaded on the electronic device, or may be downloaded from an external electronic device (e.g., the electronic device 102 or 104, or the server 106).

The kernel 320 may include a system resource manager 321 and/or a device driver 323. The system resource manager 321 may perform the control, allocation, or retrieval of system resources. The system resource manager 321 may include a process manager, a memory manager, or a file system manager. The device driver 323 may include a display driver, a camera driver, a bluetooth driver, a shared memory driver, a USB driver, a keypad driver, a Wi-Fi driver, an audio driver, or an inter-process communication (IPC) driver.

The middleware 330 may provide a function required by the applications 370 in common or provide various functions to the applications 370 through the API 360 so that the applications 370 can efficiently use limited system resources within the electronic device. The middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 354.

The runtime library 335 may include a library module which a compiler uses in order to add a new function through a programming language while the applications 370 are being executed. The runtime library 335 may perform input/output management, memory management, or the functionality for an arithmetic function.

The application manager 341 may manage a life cycle of at least one of the applications 370. The window manager 342 may manage graphical user interface (GUI) resources used for the screen. The multimedia manager 343 may determine a format required to reproduce various media files, and may encode or decode a media file by using a coder/decoder (codec) appropriate for the corresponding format. The resource manager 344 may manage resources, such as a source code, or a memory, a storage space of at least one of the applications 370.

The power manager 345 may operate together with a basic input/output system (BIOS) to manage a battery or power, and may provide power information required for the operation of the electronic device. The database manager 346 may generate, search for, and/or change a database to be used by at least one of the applications 370. The package manager 347 may manage the installation or update of an application distributed in the form of a package file.

The connectivity manager 348 may manage a wireless connection such as Wi-Fi or bluetooth. The notification manager 349 may display or notify of an event, such as an arrival message, an appointment, and a proximity notification in such a manner as not to disturb the user. The location manager 350 may manage location information of the electronic device. The graphic manager 351 may manage a graphic effect, which is to be provided to the user, or a user interface related to the graphic effect. The security manager 352 may provide various security functions required for system security and user authentication. When the electronic device has a telephone call function, the middleware 330 may further include a telephony manager for managing a voice call function or a video call function of the electronic device. The payment manager 354 may relay information for payment from the application 370 to the kernel 320. Further, the payment manager may store information related to the payment, which has been received from an external device, in the electronic device 200 or transfer the internally stored information to an external device.

The middleware 330 may include a middleware module that forms a combination of various functions of the above-described elements. The middleware 330 may provide a module specialized for each type of OS in order to provide a differentiated function. Also, the middleware 330 may dynamically delete some of the existing elements, or may add new elements.

The API 360 isa set of API programming functions, and may be provided with a different configuration according to an OS. For example, in the case of Android™ or iOS™, one API set may be provided for each platform. In the case of Tizen™, two or more API sets may be provided for each platform.

The applications 370 may include one or more applications which can provide functions such as home 371, dialer 372, SMS/MMS 373, Instant Message (IM) 374, browser 375, camera 376, alarm 377, contacts 378, voice dialer 379, email 380, calendar 381, media player 382, album 383, clock 385, health care (for example, measure exercise quantity or blood sugar level), or environment information (for example, atmospheric pressure, humidity, or temperature information).

The applications 370 may include an information exchange application for supporting information exchange between the electronic device 101 and an external electronic device (e.g., the electronic device 102 or 104). The information exchange application may include, for example, a notification relay application for transferring specific information to an external electronic device or a device management application for managing an external electronic device.

The notification relay application may include a function of transferring, to the external electronic device, notification information generated from other applications of the electronic device 101 (e.g., an SMS/MMS application, an e-mail application, a health management application, or an environmental information application). Further, the notification relay application may receive notification information from an external electronic device and provide the received notification information to a user.

The device management application may manage (for example, install, delete, or update) at least one function of an external electronic device communicating with the electronic device (for example, a function of turning on/off the external electronic device itself (or some components) or a function of adjusting luminance (or a resolution) of the display), applications operating in the external electronic device, or services provided by the external electronic device (for example, a call service and a message service).

The application 370 may include applications (for example, a health care application of a mobile medical appliance) designated according to attributes of the external electronic device 102 or 104. The application 370 may include an application received from the external electronic device. The application 370 may include a preloaded application or a third party application which can be downloaded from the server. Names of the elements of the program module 310, according to the above-described embodiments, may change depending on the type of OS.

At least a part of the program module 310 may be implemented in software, firmware, hardware, or a combination of two or more thereof. At least a part of the program module 310 may be implemented by the processor 210. At least a part of the program module 310 may include a module, a program, a routine, a set of instructions, and/or a process for performing one or more functions.

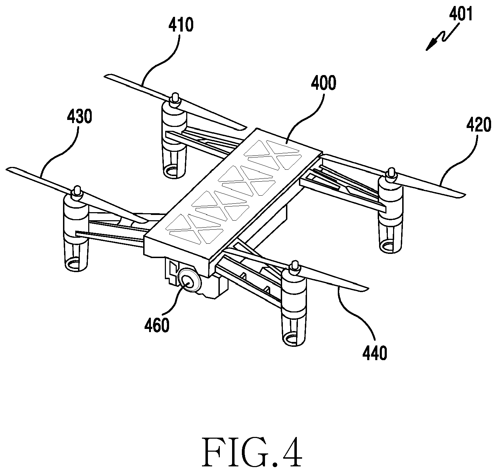

FIG. 4 illustrates an external structure of a second electronic device, according to an embodiment of the present disclosure.

Referring to FIG. 4, a second electronic device 401 may include a main board 400, a gimbal camera 460, and propellers 410 to 440. The second electronic device 401 may be a flying object such as a UAV or a drone. The second electronic device 401 may have a camera equipped in a lower portion thereof, and may capture an image by using the camera in flight. According to the number of rotors (or the number of propellers), the second electronic device 401 may be referred to as a dualcopter if the number is 2, a tricopter if the number is 3, a quadcopter if the number is 4, a hexacopter if the number is 6, or an octocopter if the number is 8.

A rotation direction of the second electronic device 401 may be the same as that of a facing propeller and may be opposite to that of a neighboring propeller. For example, in case of the quadcopter, among four propellers 410 to 440, the two propellers 410 and 430 may rotate in a clockwise direction, and the two propellers 420 and 440 may rotate in a counterclockwise direction. A reason that the propellers have different rotation directions may be for conservation of angular momentum. For example, if the four propellers rotate in the same direction, the second electronic device 401 may continuously rotate in one direction according to the conservation of angular momentum. Changing of the direction by controlling a rotation speed of each of propellers of the second electronic device 401 may also be an example of using the conservation of angular momentum.

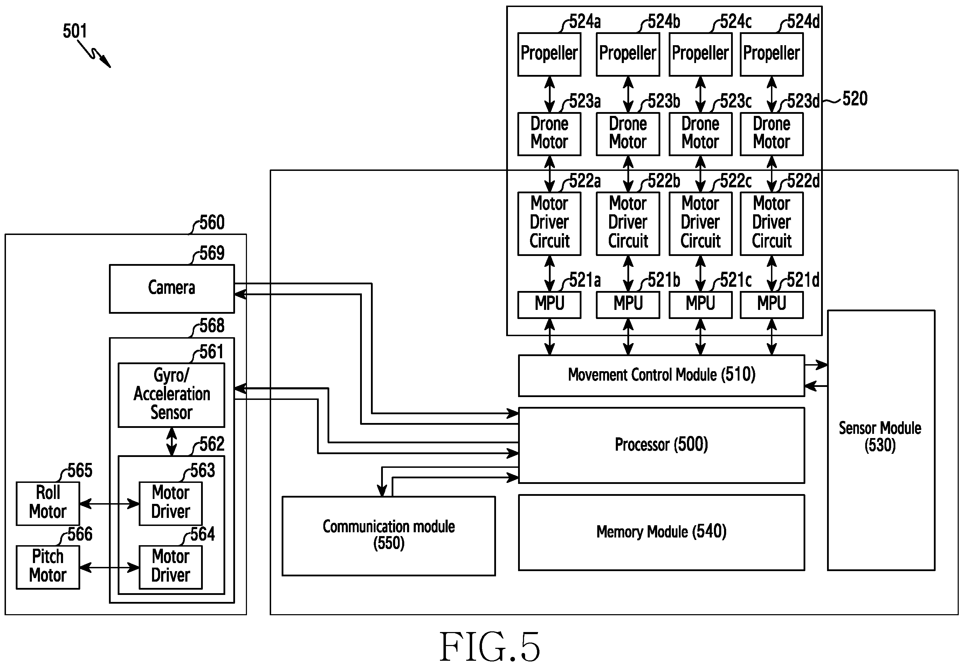

Referring to FIGs. 4 and 5, an operation of controlling a posture of the second electronic device 401 and controlling a flight may be performed by a movement control module 510. The movement control module may analyze information collected from a sensor control module 530 to recognize a current state of the second electronic device 401. The movement control module may use all or some of a gyro sensor for measuring angular momentum of the second electronic device 401, an acceleration sensor for measuring acceleration of the second electronic device 401, a terrestrial magnetism sensor for measuring a magnetic field of the Earth, a barometer for measuring an altitude, and a GPS module 555 for outputting 3D locational information of the second electronic device 401. The movement control module may control a rotation of the propellers 410 to 440 by allowing the second electronic device 401 to keep its balance in flight on the basis of measurement information output from the sensor module 530 or the GPS module.

The movement control module may identify (or analyze) a measurement result of the sensor module or the GPS module to reliably control the flight of the second electronic device 401. The second electronic device 401 may move in a front/back/left/right direction by increasing a rotation speed of a propeller located in a direction opposite to a desired direction. The second electronic device 401 may move in a direction in which it is intended to move by decreasing the rotation speed of the propeller in the direction in which it is intended to move. To rotate the second electronic device 401, the movement control module may adjust a rotation speed of two propellers facing each other by rotating them in the same direction. If angular momentum of a propeller rotating in any one direction becomes dominant, the second electronic device 401 loses its balance and thus may rotate in an opposite direction. For example, when the movement control module increases a rotation speed of the propellers 410 and 430 rotating in a clockwise direction, the second electronic device 401 may change the direction to a counterclockwise direction. In addition, when the movement control module decreases a rotation speed of all propellers, the second electronic device 401 may descend, and if it increases the rotation speed, the second electronic device 401 may ascend.

The second electronic device 401 may change or move the direction to an up/down/left/right direction in a multi-dimensional (3D) space. For example, in case of the quadcopter, the second electronic device 401 may control the rotation of the propellers 410 to 440 to perform an operation of changing to the up/down/left/right direction, and may move forward, backward, left, and right.

FIG. 5 illustrates a structure of a second electronic device, according to an embodiment of the present disclosure. An example in which the second electronic device is a quadcopter is illustrated in FIG. 5.

Referring to FIG. 5, a second electronic device 501 may include all or some parts of the second electronic device 401 of FIG. 4. The second electronic device 501 may include one or more processors (e.g. APs) 500, a movement control module 501, a driving module 520, a sensor module 530, a memory module 540, a communication module 550, or a camera module 560.

The processor 500 may provide control to capture a subject (e.g., information of a user or a front direction of the user) on the basis of received capture information. The capture information may include location and size information of the subject. For example, if the subject is a person, the capture information may be body index information (e.g., face size and face coordinate information). In case of capturing a person, a subject in capture information (an image) and a subject of an object to be captured (a preview image) may or may not be the same person. Regardless of whether the subject is the same person or not, location or size information of the person may be determined by a relative location or size. The processor 500 may compare and analyze subject composition information acquired through a camera and subject composition information based on the capture information. The processor 500 may calculate a relative distance between the second electronic device 501 and the subject according to the comparison result generate a distance movement command, and may further generate an altitude movement command of the second electronic device 501 by using a vertical coordinate of the subject, and generate a horizontal and azimuth command of the second electronic device 501 by using a horizontal coordinate of the subject.

The movement control module 510 (e.g., a micro controller unit (MCU)) may use location and posture information of the second electronic device 501 to control a movement of the second electronic device 501. If the second electronic device 501 is an UAV, the movement control module 510 may control a roll, pitch, yaw, or throttle of the UAV according to the acquired location and posture information. The movement control module 510 may control a hovering operation, and may generate a movement control command so that the second electronic device 501 is allowed to autonomously fly to a target location of capturing the second electronic device 501 on the basis of an autonomous flight command (a distance movement, an altitude movement, a horizontal or azimuth command) provided in the processor 500.

If the second electronic device 501 is a quadcopter, the driving module 520 may include micro processor units (MPUs) 521a to 521d, motor drivers 522a to 522d, and propellers 524a to 524d. The MPUs 521a to 521d may output control data for rotating the respective propellers 524a to 524d on the basis of capture location information output to the movement control module 510. The motor drivers 522a to 522d may output corresponding motor control data output to the MPUs 521a to 521d by converting the data into a driving signal. The motors 523a to 523d may control a rotation of the corresponding propellers 524a to 524d on the basis of the driving signal of the corresponding motor drivers 522a to 522d. In a capture mode, the driver module 520 may allow the second electronic device 501 to autonomously move (or fly) to a capture location under the control of the movement control module 510.

The sensor module 530 may be the sensor module 240 of FIG. 2. The sensor module 530 may include some or all parts of a gesture sensor 240A capable of sensing a motion and/or gesture of a subject, a gyro sensor 240B capable of measuring angular momentum of the second electronic device 510 in flight, a barometer 240C capable of measuring an atmospheric pressure change and/or barometric pressure, a terrestrial magnetism sensor (or a compass sensor) capable of measuring a magnetic field of the Earth, an acceleration sensor 240E for measuring acceleration of the second electronic device 501 in flight, an ultrasonic sensor capable of measuring a distance by outputting an ultrasonic wave to measure a signal reflected from an object, an optical flow sensor capable of calculating a location by using a camera module to recognize a geographical feature or pattern of the ground, a temperature-humidity sensor 240J capable of measuring temperature and humidity, an illumination sensor 240K capable of measuring illumination, and an UV sensor 240M capable of measuring a ultraviolet ray.

The sensor module 530 may calculate a posture of the second electronic device 501 and may be a gyro sensor and/or an acceleration sensor. The processor 500 may calculate an azimuth, and may combine an output of the terrestrial magnetism sensor to avoid a drift of the gyro sensor.

The memory module 540 may include an internal memory and an external memory. The memory module 540 may store a command or data related to at least one different constitutional element of the second electronic device 501. The memory module 540 may store capture information including size and location information of a subject to be captured in the capture mode.

The communication module 550 may be the communication module 220 of FIG. 2. As a wired communication module, the communication module 550 may include, for example, an RF module 229, a cellular module 221, a WiFi module 223, a BT module 224, or a GPS module 227. The communication module 550 may receive the capture information transmitted from the first electronic device 201 and transmit the images captured in the second electronic device 501 to the first electronic device 201.

The GPS module may output location information including longitude, latitude, altitude, GPS speed, or GPS heading information of the second electronic device 501 while the second electronic device 501 (the UAV) is in motion. The location information may be used to calculate a location by measuring an accurate time and distance through the GPS module. The GPS module may acquire not only the latitude, longitude, and altitude locations but also an accurate time together with 3D speed information.

The second electronic device 501 may transmit information for confirming a real-time movement state of the second electronic device 501 to the first electronic device 201 through the communication module 550.

The camera module 560 may include a camera 569 and a gimbal 568. The gimbal 568 may include a gimbal controller 562, a sensor 561, motor drivers 563 and 564, and motors 565 and 566. The camera 569 may perform a capture operation in a capture mode. The camera 569 may include a lens, an image sensor, an image processor, and a camera controller. The camera controller may adjust a composition with respect to a subject and/or a camera angle (a capture angle) by adjusting an up/down/left/right angle of the camera lens on the basis of composition information and/or camera control information output from the processor 500.

The camera 569 may be affected by a movement of the second electronic device 501. The gimbal 568 may capture a reliable image by allowing the camera 569 to maintain a specific tilt irrespective of the movement of the second electronic device 501. Regarding an operation of the gimbal 568, the sensor 561 may include a gyro sensor and an acceleration sensor. The gimbal controller 562 may recognize the movement of the second electronic device 501 by analyzing a measurement value of the sensor 561 including the gyro sensor and the acceleration sensor. The gimbal controller 562 may generate compensation data depending on the movement of the second electronic device 501. The compensation data may be data for controlling at least one part of a pitch or roll of the camera module 560. For example, the gimbal 568 may deliver roll compensation data to the motor driver 563, and the motor driver 563 may convert the roll compensation data into a motor driving signal and may deliver it to the roll motor 565. Alternatively or additionally, the gimbal 568 may deliver pitch compensation data to the motor driver 564, and the motor driver 564 may convert the pitch compensation data into a motor driving signal and deliver it to the pitch motor 566. The roll motor 565 and the pitch motor 566 may compensate the roll and pitch of the camera module 560 according to the movement of the second electronic device 501. The camera 569 may be stabilized in an upright state of the camera 569 by offsetting a rotation (e.g., a pitch and a roll) of the second electronic device 501.

Since certain elements of FIG. 5 are not necessary in various embodiments of the present disclosure, the second electronic device 501 may be implemented to have more elements or to have less elements than the elements described in FIG. 5. For example, the second electronic device 501 may further include an audio module 280, an indicator 297, a power management module 295, or a battery 296.

According to various exemplary embodiments, an electronic device may include a communication module, a memory storing instructions, and one or more processors coupled to the communication module. The one or more processors may be configured to execute the instructions to receive information related to a movement of an external electronic device from the external electronic device by using the communication module, determine a range of moving the electronic device, at least on the basis of the information related to the movement, determine a location to which the electronic device is moved, at least on the basis of the range, and move the electronic device to the location.

The information related to the movement may include at least one of speed information and direction information and at least one of accuracy information of the speed information and accuracy information of the direction information. The one or more processors may be further configured to execute the instructions to determine at least one point on the basis of at least one of the speed information and the direction information, and to determine an area related to the at least one point on the basis of at least one of the accuracy information of the speed information or the accuracy information of the direction information.

The one or more processors may be further configured to execute the instructions to determine the at least one point on the basis of the speed information, the direction information, or a current location of the electronic device.

The one or more processors may be further configured to execute the instructions to receive information regarding a maintenance distance between the external electronic device and the electronic device from the external electronic device by using the communication module, and determine an area related to the at least one point on the basis of the information regarding the maintenance distance.

The one or more processors may be further configured to execute the instructions to determine a lengthwise area of a range in which the electronic device moves from a current location of the electronic device on the basis of information regarding accuracy of the speed information, and determine a widthwise area of the range to which the electronic device moves from the current location on the basis of information regarding accuracy of the direction information.

The one or more processors may be further configured to execute the instructions to determine the lengthwise area of the range in which the electronic device moves to be narrow when the accuracy of the speed information satisfies a designated value, and determine the lengthwise area to be wide when the accuracy of the speed information does not satisfy the designated value.

The processor may be further configured to execute the instructions to determine the widthwise area in which the electronic device moves to be narrow when the accuracy of the direction information satisfies a designated value, and determine the widthwise direction to be wide when the accuracy of the direction information does not satisfy the designated value.

The one or more processors may be further configured to execute the instructions to identify a variation of the information related to the movement, and determine the location on the basis of the identified variation.

The one or more processors may be further configured to execute the instructions to determine the location by applying the variation to the movement range when the variation is identified, and determine the location to be a center of the movement range when the variation is not identified.

The electronic device may further include at least one camera. The one or more processors may be further coupled to the at least one camera, and may be configured to execute the instructions to acquire data on an image including an object corresponding to the external electronic device by using the at least one camera, determine information related to a movement of the object on the basis of the acquired data, and determine the location on the basis of the information related to the movement of the object.

The one or more processors may be further configured to execute the instructions to receive user information from the external electronic device by using the communication module, and determine the location on the basis of the received user information.

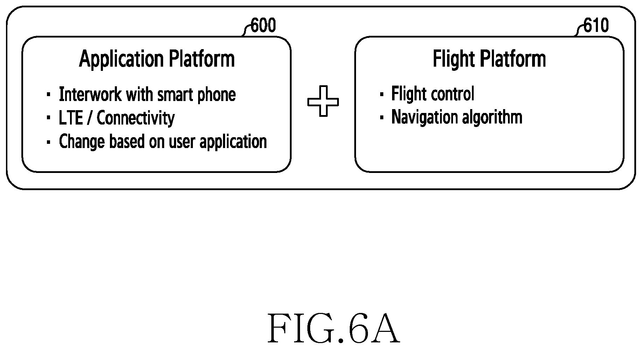

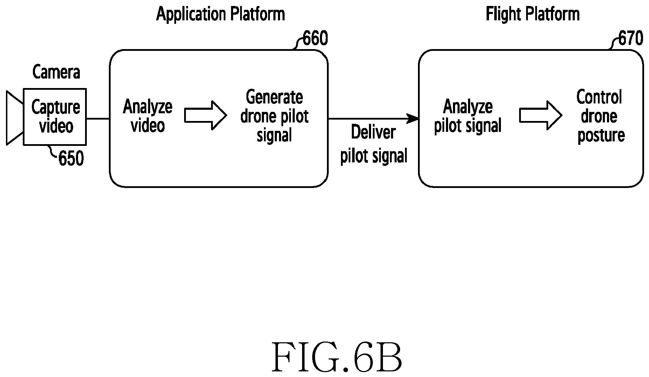

FIG. 6A and FIG. 6B illustrate a platform structure of a second electronic device, according to an embodiment of the present disclosure.

Referring to FIG. 6A, the second electronic device 501 may include an application platform 600 and a flight platform 610.

The application platform 600 may interwork with the first electronic device 201 to perform a communication connectivity, an image control, a sensor control, a charging control, or an operation changed based on a user application. The application platform 600 may be executed by the processor 500. The application platform 600 may deliver a pilot signal to the flight platform 610 while performing the communication, the image control, or the charging control. The flight platform 610 may perform a flight control and navigation algorithm. The flight platform 610 may be executed by the movement control module 510. The flight platform 610 may control the flight of the second electronic device 501 by using the pilot signal received form the application platform 600. The second electronic device 501 may include at least one flight platform for controlling the flight according to the application platform and navigation algorithm for providing a service and driving an unmanned flight by wirelessly interworking with the first electronic device 201 to receive a control signal.

Referring to FIG. 6B, the second electronic device 501 may autonomously move (or fly) to a capture destination location by analyzing a preview image (e.g., image information including an object (e.g., a user) corresponding to an external electronic device) acquired in a camera module 650 in the capture mode. For example, a processor 660 may acquire image information including a user corresponding to the first electronic device 201 by using the camera module 650, may determine the user's movement information at least on the basis of the image information, and may determine a location to which the second electronic device 510 moves at least on the basis of the user's movement information.

When the camera module 650 acquires image information including a subject, the processor 660 may analyze the acquired image to generate a command to pilot the second electronic device 501. The processor 660 may calculate a relative distance between the second electronic device 501 and the subject by analyzing the acquired subject's size information to generate a distance movement command, may generate an altitude movement command of the second electronic device 501 by using a vertical coordinate of the subject, and may generate a horizontal and azimuth command of the second electronic device 501 by using a horizontal coordinate of the subject. Such commands may be pilot signals used to pilot the second electronic device 501. The movement control module 670 may analyze the pilot signal delivered from the processor 660, and may control a movement module on the basis of the analyzed pilot signal for an autonomous flight of the second electronic device 501.

The second electronic device 501 may be a UAV which may include a movement control module 670 and a GPS module 555. The movement control module 670 may measure a flight posture, posture angular speed, or acceleration of the second electronic device 501 through a sensor module 530. The GPS module may measure a location of the second electronic device 501. Output information of the sensor module and the GPS module may be basic information for a navigation/autopilot of the second electronic device 501.

The movement control module 670 may be a sensor for calculating a posture of the unmanned aerial vehicle of a roll and a pitch, and may use a gyro sensor 532 and an acceleration sensor 535 of a sensor module. The posture of the second electronic device 501 may measure an angular speed of the second electronic device 501 by using the gyro sensor, and may calculate the posture of the second electronic device 501 by performing integral calculus on the measured angular speed to calculate the posture of the second electronic device 501. In this case, a small error component included in an output of the gyro sensor may lead to an increase in a posture error through an integral calculus process. The movement control module 670 may use an acceleration sensor to correct the calculation for the posture of the second electronic device 501. In addition, a method of correcting a yaw angle of the second electronic device 501 may use an output of a terrestrial magnetism sensor. When in a standstill state, the movement control module 670 may use an output of an acceleration sensor to calculate roll and pitch angles. In addition, an output of the terrestrial magnetism sensor 534 may be combined to avoid a drift of the gyro sensor.

The sensor module may include a barometer 533 capable of measuring an altitude through an atmospheric pressure difference depending on the flight of the second electronic device 501 and the ultrasonic sensor 535 for precisely measuring an altitude at a low altitude.

The second electronic device 501 may capture a picture/video. The second electronic device 501 may fly according to lift and torque. A helicopter may use a tail rotor for offsetting a reaction according to a rotation of a main rotor. For the rotation, the second electronic device 501 may rotate a half of a multi-propeller in a clockwise (CW) direction, and may rotate the other half thereof in a counter clockwise (CCW) direction. A 3D coordinate based on the flight of the second electronic device 501 may be determined by pitch (Y)/roll (X)/yaw (Z).

In addition, the second electronic device 501 may fly to the front, back, left, or right through tilting. A direction of an air flow entering a rotor may change when the second electronic device 501 is tilted. For example, when the second electronic device 501 is pushed forward, air may flow not only upward and downward but also slightly backward. Accordingly, the second electronic device 501 may move when an airframe moves forward by pushing an air layer backward according to the physics principle of action and reaction. A method of tilting the second electronic device 501 may reduce a speed at a front side of a corresponding direction and increase a speed at a back side. Since this method is common to all directions, the second electronic device 501 may move through tilting only by controlling a speed of the rotor.

In the capture mode, a camera angle may be adjusted according to a location (height, altitude) of the second electronic device 501. An eye level may be an angle at which a subject is taken in a horizontal direction by capturing it at a height of an eye. The eye level can be naturally recognized since it is the same as an eye gaze in daily life, and a special distortion or manipulation may not be sensed. A high angle may be an angle that can be used to show an overall situation. For example, a high angle may be a camera angle for looking down at the subject from an upper direction. As opposed to a high angle, a low angle may correspond to a method of capturing by looking up at the subject from a lower position than the subject (i.e., elevation capturing).

In various embodiments of the present disclosure, the second electronic device 501 may control a camera according to a location or composition of a subject so that the camera is directed to the subject.

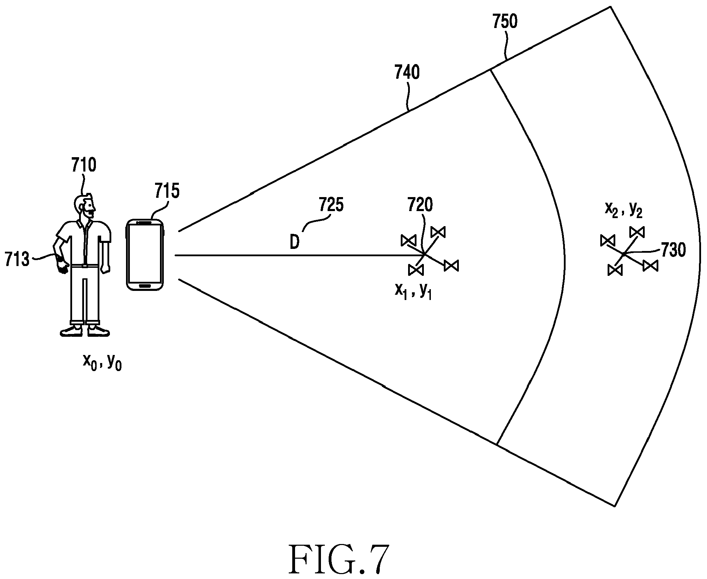

FIG. 7 illustrates an example of determining a movement location of a second electronic device, according to an embodiment of the present disclosure.

Referring to FIG. 7, the second electronic device 501 may determine a location to which it moves ahead of a user 710. For example, the second electronic device 501 may be located at a position 720 (x₁, y₁) (including an azimuth (zi)) ahead of the user 710 from a front direction of the user 710 while maintaining a specific distance (e.g., 10m) with respect to the user 710. The second electronic device 501 may receive information related to a movement from a first electronic device 715 and/or a wearable device 713 carried by the user 710 when the user 710 moves. The second electronic device 501 may be paired with the first electronic device 715 and/or the wearable device 713. The paring may imply that the second electronic device 501, the first electronic device 715 and/or the wearable device 713 are connected to each other for communication. Since a pairing procedure between devices corresponds to a conventional technique, a detailed description thereof is omitted.

When paired with the second electronic device 501, the first electronic device 715 and/or the wearable device 713 may transmit the information related to the movement to the second electronic device 501 periodically or on a real time basis. In addition, the first electronic device 715 and/or the wearable device 713 may be set by a user to a maintenance distance D 725 with respect to the second electronic device 501. When paired with the second electronic device 501, the first electronic device 715 and/or the wearable device 713 may deliver the maintenance distance 725, which is preset or set by the user, to the second electronic device 501. When transmitting the information related to the movement, the first electronic device 715 and/or the wearable device 713 may transmit an accuracy of the information related to the movement together. The maintenance distance 725 may be directly set in the second electronic device 501 by the user, or may be set to a default value in the second electronic device 501.

The second electronic device 501 may determine (or predict) a location (x₂, y₂) (including an azimuth (z₂)) to which it moves along with a movement of the user 710 on the basis of the received information related to the movement. The second electronic device 501 may determine a movement range 750 on the basis of the accuracy of the information related to the movement, and may determine a movement location 730 on the basis of the determined movement range 750. For example, the movement range 750 may represent a range (or area) in which the second electronic device 501 moves after a specific time (e.g., 1 second or 3 seconds) elapses along with the movement of the user 710 from a current movement range 740 including the current location 720 (x₁, y₁) of the second electronic device 501. The movement range 750 may be determined to have a specific angle range (e.g., about 45 degrees or 60 degrees) to the left or right from the current location (x₀, y₀) of the user 710. The specific angle range may be adjusted according to the accuracy of movement direction information of the user 710. The second electronic device 501 may determine an area of the movement range to be narrow or wide according to the accuracy of the information related to the movement. The accuracy may represent validity, reliability, or uncertainty of the information related to the movement.

The information related to the movement may correspond to speed information of the first electronic device 715 and/or the wearable device 713. The speed information may imply GPS speed information or sensor speed information. If accuracy of the speed information satisfies a designated condition (e.g., an error range of about +/- 5, or accuracy is greater than or equal to 70%), the second electronic device 501 may determine an area (e.g., a lengthwise area) of the movement range 750 to be narrow. On the contrary, if the accuracy of the speed information does not satisfy the designated condition (e.g., the error range is about +/- 20, or the accuracy is less than about 50%), the second electronic device 501 may determine the area of the movement range 750 to be wide. For example, the lengthwise area may imply a front or backside interval in a straight direction at the current location 720 with respect to the current location 720 of the second electronic device 501.

Alternatively, the information related to the movement may be direction information of the first electronic device 715 and/or the wearable device 713. The direction information may imply GPS direction information or sensor direction information. If accuracy of the direction information satisfies the designated condition, the second electronic device 501 may determine an area of the movement range 750 (e.g., a widthwise area) to be narrow. On the contrary, if the accuracy of the direction information does not satisfy the designated condition, the second electronic device 501 may determine the area of the movement range 750 to be wide. For example, the widthwise area may imply a left or right interval in a straight direction at the current location 720 with respect to the current location 720 of the second electronic device 501.

The second electronic device 501 may correct the movement range 750 by applying at least one of the activity information, the GPS location information, and the maintenance distance to the determined movement range 750. The activity information may be generated as information representing a user's activity by processing the GPS speed information, the GPS direction information, the sensor speed information, the sensor direction information, or the sensor acceleration information. The activity information may be generated by the first electronic device 715 and/or the wearable device 713 and may be delivered to the second electronic device 501. The second electronic device 501 may further consider a variety of information to determine the movement range 750 more accurately. Therefore, the movement location 730 of the second electronic device 501 may be a location obtained by applying the movement distance of the user 710 and the maintenance distance 725 to the user 710 from the current location 720 of the second electronic device 501. When the second electronic device 501 moves frequently, battery consumption of the second electronic device 501 may be increased. The second electronic device 501 may more accurately select the movement location, so that the second electronic device 501 can operate more reliably, and the battery consumption of the second electronic device 501 can be saved.

The wearable device 713 of FIG. 7 may be interpreted as one type of the first electronic device 715. The wearable device 713 may transmit information directly to the second electronic device 501, and may transmit the information to the second electronic device 501 via the first electronic device 715. Although the first electronic device 715 and the wearable device 713 are described in FIG. 7 as two devices, different devices other than the first electronic device 715 and the wearable device 713 may be used to transmit the information related to the user's movement to the second electronic device 501. Any one of the first electronic device 715 and/or the wearable device 713 may communicate with the second electronic device 501 to perform the present disclosure.

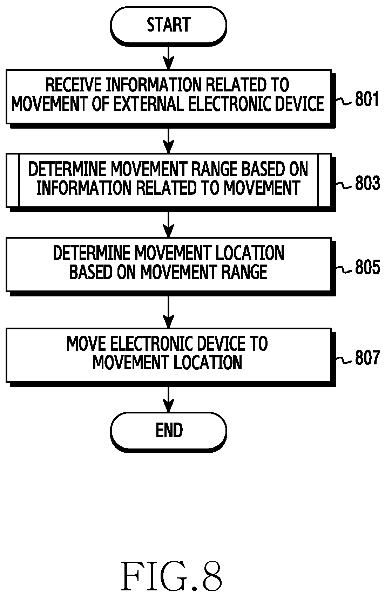

FIG. 8 is a flowchart illustrating a method of operating a second electronic device, according to an embodiment of the present disclosure.

Referring to FIG. 8, in step 801, the second electronic device 501 uses a communication module 550 to receive information related to a movement from the first electronic device 201. The information related to the movement is information related to a movement of a user, and may include GPS information or sensor information measured in the first electronic device 201. Since the user moves by carrying or wearing the first electronic device 201, the second electronic device 501 may determine (or predict) a movement location of the second electronic device 501 on the basis of information measured in the first electronic device 201.

The measured information may be information measured in a communication module 220 or a sensor module 240. For example, the information measured in the communication module 220 is GPS information, and may include at least one of GPS speed information, GPS location information, and GPS direction information. The information measured in the sensor module 240 may be sensor information, and may include at least one of sensor speed information, sensor direction information, sensor posture information, and sensor acceleration information.

The first electronic device 201 according to various embodiments may use a communication module 550 to transmit accuracy for information related to the movement to the second electronic device 501. The accuracy may indicate validity, reliability, or uncertainty of the information related to the movement. The first electronic device 201 may transmit the accuracy regarding the acquired information to the second electronic device 501, and thus the second electronic device 501 may more accurately determine a movement location on the basis of the information related to the movement.

The first electronic device 201 may generate activity information by processing the measured information. The activity information may be information acquired in such a manner that the first electronic device 201 processes the GPS information or the sensor information. The first electronic device 201 may receive a maintenance distance between the first electronic device 201 and the second electronic device 501 from the user, or it may be set in the first electronic device 201 by default. The processor 500 may receive information regarding the maintenance distance when paired with the first electronic device 201. Alternatively, the processor 500 may receive the activity information or the information regarding the maintenance distance together when the information related to the movement is received.

In step 803, the second electronic device 501 determines a movement range (e.g., a range in which the second electronic device 501 moves) on the basis of the information related to the movement. The movement range may have a coarse (e.g., estimated, rough or broad) range used before determining an accurate location to which the second electronic device 501 moves. The movement range may have a specific area in a widthwise or lengthwise direction. The movement range may be set to have a specific area in a widthwise direction, a lengthwise direction, or a height direction. Alternatively, the height direction may be fixed to a predetermined location value (e.g., a hovering location or an altitude setup value).

The processor 500 may determine at least one point on the basis of at least one of the GPS speed (or GPS speed information) and sensor direction information, and may determine a movement range from the at least one point on the basis of the accuracy. For example, the processor 500 may determine a movement point on the basis of the GPS speed, and may determine a movement direction on the basis of the sensor direction information. If the GPS speed is greater than a threshold (e.g., greater than about 4km/h), the processor 500 may predict the movement direction by using the GPS direction information. Alternatively, if the GPS speed is less than the threshold (e.g., less than about 4km/h), the second electronic device 501 may predict (or determine) the movement direction by using the sensor direction information.

If the accuracy of the GPS speed satisfies a designated condition, the processor 500 may determine a lengthwise area of a movement range from the point to be narrow, and if the accuracy of the sensor direction information satisfies the designated condition, the processor 500 may determine a widthwise area of the movement range from the point to be narrow. If the accuracy of the GPS speed satisfies the designated condition, the processor 500 may determine the lengthwise area of the movement range from the point to be narrow. If the accuracy of the sensor direction information does not satisfy the designated condition, the processor 500 may determine the widthwise area of the movement range from the point to be wide. In other embodiments of the present disclosure, if the accuracy of the GPS speed does not satisfy the designated condition, the processor 500 may determine the lengthwise area of the movement range from the point to be wide. If the accuracy of the sensor direction information satisfies the designated condition, the processor 500 may determine the widthwise area of the movement range from the point to be narrow.

The processor 500 may determine the area of the movement range to be narrow or wide on the basis of the accuracy of the information related to the movement. For example, if the accuracy of the information related to the movement satisfies a designated condition, the processor 500 may determine the area of the movement range to be narrow, and if the accuracy of the information related to the movement does not satisfy the designated condition, the processor 500 may determine the range of the movement range to be wide.

The lengthwise area of the movement range may be determined by using the GPS speed. According to how fast the user moves, a movement distance having a straight direction (e.g., a vertical direction, a lengthwise direction, or a front/back direction) may be determined. For example, a movement distance for a case where the user walks about 4km/h for a particular time duration (e.g., 10 seconds or 1 minute) may be smaller than a movement distance for a case where the user runs about 15km/h. Therefore, the processor 500 may determine a lengthwise range for the movement range on the basis of a GPS speed and accuracy of the GPS speed. If accuracy of GPS speed information satisfies a designated condition, the processor 500 may determine the lengthwise area of the movement range to be narrow. If the accuracy of the GPS speed does not satisfy the designated condition, the processor 500 may determine the lengthwise area of the movement range to be wide, and may correct the lengthwise area of the movement range by further considering sensor speed information, activity information, or GPS location information.

A widthwise area of the movement range may be determined by using the sensor direction information. The widthwise area may be determined according to user's movement directivity at a current location. Therefore, according to whether the user's movement directivity is great or small, a movement direction (e.g., a horizontal direction, a widthwise direction, or a left/right direction) angle may be determined. For example, a movement direction angle (e.g., about 90 degrees) for a case having a great directivity may be greater than a movement direction angle (e.g., about 60 degrees) for a case having a small directivity. Therefore, the processor 500 may determine a widthwise range for a movement range on the basis of sensor direction information or accuracy of the sensor direction information. If the accuracy of the sensor direction information satisfies a designated condition, the processor 500 may determine the widthwise area of the movement range to be narrow. Alternatively, if the accuracy of the sensor direction information does not satisfy the designated condition, the processor 500 may determine the widthwise area of the movement range to be wide, and may correct the widthwise area of the movement range by further considering sensor speed information, activity information, or GPS location information.

In step 805, the second electronic device 501 may determine (or predict) a movement location (e.g., a location to which the second electronic device 501 moves) on the basis of the determined movement range. The processor 500 may determine the movement location on the basis of a previous variation. The processor 500 may correct the movement range to be narrower by using an accumulated movement variation (e.g., a differential value), and may determine the movement location to be a center of the corrected movement range. The accumulated movement variation may be a value obtained by differentiating a movement speed, a movement direction, and a maintenance distance. In this case, the processor 500 may determine the movement location on the basis of the maintenance distance between the first electronic device 201 and the second electronic device 501. The processor 500 may apply the maintenance distance when determining the movement range or the movement location. The processor 500 may determine the movement location by using one of the previous variation, the activity information, the GPS information, and the maintenance distance. Alternatively, if there is no accumulated movement variation, the processor 500 may determine the movement location to be the center of the movement range.

The processor 500 may determine (e.g., predict or correct) the movement range (or movement location) by using an image (image information) captured in a camera module 560 of the second electronic device 501. The second electronic device 501 may be located in a front side of a user ahead of the user. Therefore, the second electronic device 510 may confirm whether the image acquired from the camera module 560 is the front side of the user, and may determine the movement range (or movement location) by using front-side information of the user. The processor 500 may determine whether an obstacle exists on a user's movement path by using an image captured in the same direction as a user's eye gaze or information measured in an ultrasonic sensor. For example, in a case where destination information (or path information) is set in the second electronic device 501, if an obstacle of a building exists on a user's movement path (or a movement path direction), the processor 500 may determine the movement direction to avoid the obstacle. Alternatively, if the user needs to only go on sidewalks, the processor 500 may determine the movement direction to avoid a street.

The processor 500 may determine (e.g., predict or correct) the movement range (or movement location) on the basis of user information. The user information may include at least one of a gender, an age, a walking speed, and a biorhythm. The processor 500 may receive the user information from the first electronic device 201. That is, the user information may be directly input to the first electronic device 201 from the user, and may be generated in the first electronic device 201 on the basis of user history information stored in the first electronic device 201. Alternatively, the first electronic device 201 may receive big data (e.g., predictive analytic information) based on demographic information before and after performing step 801, and may transmit it to the second electronic device 501. The processor 500 may determine the movement range (or movement location) by considering a characteristic of each individual user.

Demographically, a man may walk faster than a woman, a young person may walk faster than an older person, and a walking speed may vary depending on a user's condition. In addition, users in their twenties to thirties may walk at a speed of about 5 km/h on average, users in their forties to fifties may walk at a speed of about 4 km/h on average, and users in their fifties to sixties may walk at a speed of about 3 km/h on average. Therefore, the processor 500 may determine the movement range (or movement location) more accurately by further considering the user information in addition to the information related to the movement.

In step 807, the second electronic device 501 moves the second electronic device 501 to the determined location. For example, the processor 500 may generate a flight command for controlling a movement control module 510, and may deliver the flight command to the movement control module 510. The flight command may be for moving the second electronic device 501 to the determined location. The movement control module 510 may rotate the propellers 524a to 524d according to the flight command. The processor 500 may capture the user from a front side by using the camera module 560. In addition, the processor 500 may report front-side danger information of the user to the user, or may report guide path or front-side information to the user. The processor 500 may store a location moved in step 807 in the memory module 540 as accumulated data.

Destination information (or path information) may be set in the second electronic device 501. The destination information may be set by the first electronic device 201 or the wearable device 713. That is, the user may set the destination information to the first electronic device 201 or the wearable device 713, and the first electronic device 201 or the wearable device 713 may transmit the set destination information to the second electronic device 501. The second electronic device 501 may determine the movement location by further considering the destination information to guide path information to the user.

In addition, if the user's movement direction is beyond the path information, the second electronic device 501 may provide the path information (e.g., an audio signal or a light signal) to the user to guide the user to return to the path, and may search again for the path information (e.g., movement location) of the second electronic device 501. In addition, the second electronic device 501 may capture an image on a real time basis to provide a function of guiding a nearest distance and a path suitable for a user's purpose. In addition, the second electronic device 501 may capture a front/back/left/right situation of the user by using the camera module 560 to provide image information to the user.

If the destination information is not set in the second electronic device 501, the second electronic device 501 may determine an initial location of the second electronic device 501 by using speed information, direction information, and a maintenance distance, and thereafter may receive information related to a movement from the first electronic device 201 on a real time basis to predict a next location. Even if the destination information is not set, the second electronic device 501 may move ahead by predicting the user's movement path to perform a guide function for surrounding information.

The second electronic device 501 may move in front of a user in an exercise mode to perform a pacemaker function for a variety of exercise information (e.g., jogging, walking, or cycling) on the basis of biometric information collected from the first electronic device 201. The second electronic device 501 may transmit information of an image captured in the camera module 560 to the first electronic device 201 on a real time basis, so that a user can confirm the image information through the first electronic device 201 on a real time basis. In this case, the user may use the image information to visually confirm various images and a dangerous situation at several meters ahead.

A change in a user's movement speed or movement direction may be accurately determined when a pattern or data is examined for more than a specific time period. Therefore, at least the specific time period may be required until the determination is accurately made. The second electronic device 501 may predict a movement range (or a movement location) by considering a speed variation and direction variation for the specific time period (e.g., 1 minute), and may prepare to move to a movement location by slightly moving a location of the electronic device 501 in a predicted direction within the predicted movement range. When a user's speed or direction is changed, the second electronic device 501 may decrease a predicted movement distance to provide movement reliability of the second electronic device 501.

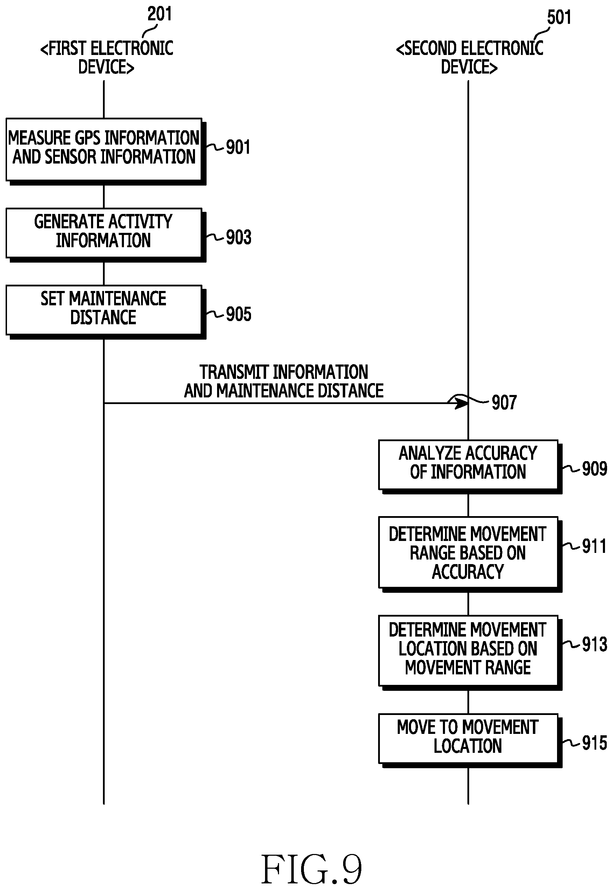

FIG. 9 is a flowchart illustrating a method of determining a movement location of a second electronic device by interworking with a first electronic device, according to an embodiment of the present disclosure.

Referring to FIG. 9, in step 901, the first electronic device 201 measures GPS information and sensor information. The first electronic device 201 may be a device carried or worn by a user. The communication module 220 of the first electronic device 201 may measure GPS information. The GPS information may include at least one of GPS speed information, GPS location information, and GPS direction information. In addition, the sensor module 240 of the first electronic device 201 may measure sensor information. The sensor information may include at least one of speed information (e.g., information measured in the acceleration sensor 240E), direction information (e.g., information measured in the gyro sensor 240B), posture information (e.g., information measured in the gyro sensor 240B), and acceleration information (e.g., information measured in the acceleration sensor 240E).

In step 903, the first electronic device 201 generates activity information. The first electronic device 201 may use the GPS information and/or the sensor information to generate the activity information. The activity information is information generated by considering the GPS information and/or the sensor information, and thus may represent user's activity more accurately.

In step 905, the first electronic device 201 sets a maintenance distance. The maintenance distance may imply a distance (or interval) between the first electronic device 201 and the second electronic device 501. The maintenance distance may be set by a user of the first electronic device 201, or may be set to a default value in the first electronic device 201. Since the second electronic device 501 is separated by more than a specific distance from a front side of the user, there is a need to maintain a specific distance to the user when the second electronic device 501 is in flight.

In step 907, the first electronic device 201 uses a communication module 220 to transmit information (e.g., GPS information, sensor information, or activity information) and the maintenance distance to the second electronic device 501. The first electronic device 201 may first transmit the maintenance distance right after being paired with the second electronic device 501. Alternatively, the first electronic device 201 may transmit the GPS information or the sensor information periodically or on a real time basis. Alternatively, the first electronic device 201 may use GPS information and/or sensor information measured for a specific time period to generate the activity information, and may transmit the generated activity information. That is, the information or the maintenance distance may be respectively transmitted at the same or at different time points.

The first electronic device 201 may use the communication module 220 to transmit the accuracy of the information to the second electronic device 501. The accuracy may vary according to how accurately the information is measured by the first electronic device 201. Therefore, according to a state of the first electronic device (or an information measuring state), the accuracy of GPS information may be high or low, and the accuracy of the sensor information may be high or low. For example, the GPS information may be measured one time at one second, and the sensor information may be measured another time at 0.5 seconds. Therefore, if a speed is less than or equal to a threshold (e.g., about 4km/h), the sensor information may have higher accuracy than the GPS information.

In step 909, the second electronic device 501 receives the information (e.g., GPS information, sensor information, or activity information), and analyzes the accuracy of the information. The accuracy may be used to determine a movement range. The information may include the accuracy information, or may not include the accuracy information. If the information includes the accuracy information, the second electronic device 501 may analyze whether the accuracy information satisfies a designated condition or does not satisfy the designated condition. Alternatively, if the information does not include the accuracy information, the second electronic device 501 may determine (or identify) that the accuracy of the information does not satisfy the designated condition.

In step 911, the second electronic device 501 determines the movement range on the basis of the accuracy. If the accuracy satisfies the designated condition, the second electronic device 501 may set an error range of the movement range to be small (or narrow), and if the accuracy does not satisfy the designated condition, the second electronic device 501 may set the error range of the movement range to be great (or wide). For example, the second electronic device 501 may determine a lengthwise area of the movement range on the basis of the GPS speed information and the accuracy of the GPS speed information. Alternatively, the electronic device 501 may determine a widthwise area of the movement range on the basis of the sensor direction information and the accuracy of the sensor direction information.

In step 913, the second electronic device 501 determines the movement location on the basis of the movement range. For example, the second electronic device 501 may confirm a variation of the information related to the movement, and may determine the movement location at least on the basis of the variation. In the presence of the variation, the second electronic device 501 may determine the movement location by applying the variation to the movement range, and in the absence of the variation, the second electronic device 501 may determine the movement location to be a center of the movement range. Alternatively, the second electronic device 501 may use an accumulated movement variation (e.g., a differential value) to correct the movement range, and may determine the movement location to be a center of the corrected movement range.

In step 915, the second electronic device 501 moves to the determined movement location. The second electronic device 501 may control the movement control module 510 to rotate the propellers 524a to 524d in order to move to the movement location. The second electronic device 501 may guide the user by providing front-side danger information, path information, or front-side information to the user.

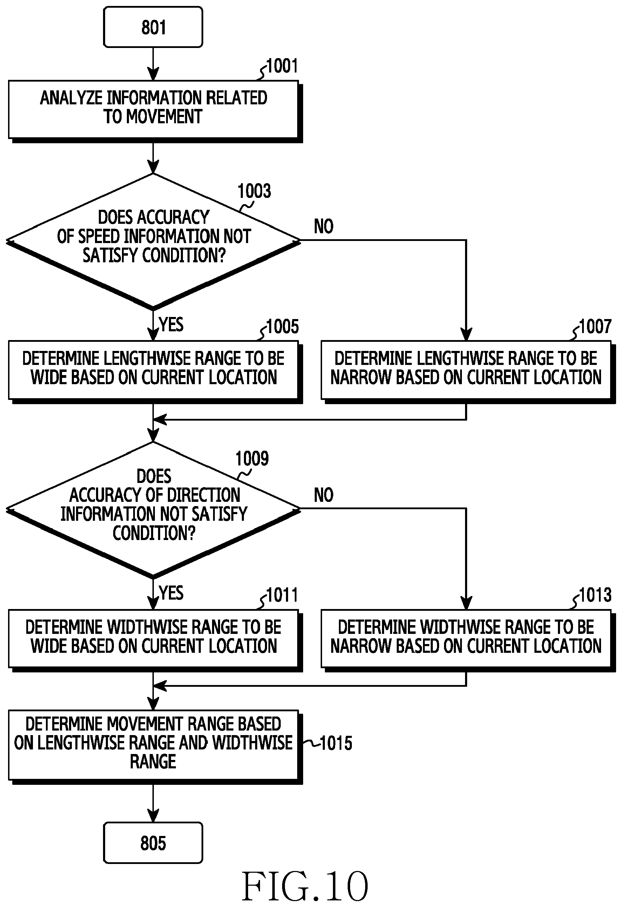

FIG. 10 is a flowchart illustrating a method of determining a movement range in a second electronic device, according to an embodiment of the present disclosure. The operation described in FIG. 10 is for describing step 803 of FIG. 8 in detail.

Referring to FIG. 10, in step 1001, the second electronic device 501 analyzes information related to a movement. Accuracy information may be included in the information related to the movement. The processor 500 may analyze whether the accuracy information is included in the information related to the movement. If the accuracy information is included in the information related to the movement, the processor 500 may analyze whether the accuracy information satisfies a designated condition. Alternatively, if the accuracy information is not included in the information related to the movement, the second electronic device 501 may determine (or identify) that the accuracy on the information does not satisfy the designated condition.

In step 1003, the second electronic device 501 determines whether accuracy of speed information does not satisfy a designated condition. The speed information may refer to GPS speed information or sensor speed information. If the accuracy of the speed information does not satisfy the designated condition, the processor 500 performs step 1005, and if the accuracy of the speed information satisfies the designated condition, the processor 500 performs step 1007.

If the accuracy of the speed information does not satisfy the designated condition, in step 1005, the second electronic device determines a lengthwise range to be wide (or great) with respect to a current location of the second electronic device 501. The lengthwise range may imply a lengthwise range of a movement range in which the second electronic device 501 moves. If the accuracy of the speed information does not satisfy the designated condition, since an error range is great, a distance range in which the second electronic device 501 moves may be wide. The processor 500 may determine a movement point (or a movement distance) on the basis of the speed information, and may determine a lengthwise range to be wide (or great) from the determined point on the basis of the accuracy of the speed information.

If the accuracy of the speed information satisfies the designated condition, in step 1007, the second electronic device 501 determines a lengthwise range to be narrow (or small) with respect to a current location of the second electronic device 501. If the accuracy of the speed information satisfies the designated condition, since an error range is small, a distance range in which the second electronic device 501 moves may be narrow. In this case, a location to which the second electronic device 501 moves may be determined more accurately. That is, the processor 500 may determine a movement point (or a movement distance) on the basis of the speed information, and may determine a lengthwise range to be narrow (or small) from the determined point on the basis of the accuracy of the speed information.

After determining the lengthwise range of the movement range (e.g., step 1005 or step 1007), in step 1009, the second electronic device 501 (e.g., the processor 500) determines whether the accuracy of direction information does not satisfy a designated condition. The direction information may imply GPS direction information or sensor direction information. If the accuracy of the direction information does not satisfy the designated condition, the processor 500 performs step 1011, and if the accuracy of the direction information satisfies the designated condition, the processor 500 performs step 1013.

If the accuracy of the direction information does not satisfy the designated condition, in step 1011, the second electronic device 501 determines a widthwise range to be wide (or great) with respect to the current location of the second electronic device 501. The widthwise range may imply a widthwise range of the movement range in which the second electronic device 501 moves. If the accuracy of the direction information does not satisfy the designated condition, since an error range is great, a direction range in which the second electronic device 501 moves may be wide. The processor 500 may determine a movement direction on the basis of the direction information, and may determine a widthwise range to be wide (or great) from a point determined by the speed information on the basis of accuracy of the direction information.

If the accuracy of the direction information satisfies the designated condition, in step 1013, the second electronic device 501 determines a width range to be narrow (or small) with respect to a current location of the second electronic device 501. If the accuracy of the direction information satisfies the designated condition, since an error range is small, a direction range in which the second electronic device 501 moves may be narrow. In this case, a location to which the second electronic device 501 moves may be determined more accurately. The processor 500 may determine a movement direction on the basis of the direction information, and may determine a widthwise range to be narrow (or small) from a point determined by the speed information on the basis of the accuracy of the direction information.

In step 1015, the second electronic device 501 determines the movement range on the basis of the determined lengthwise range and the determined widthwise range. If both of the accuracy of the speed information and the accuracy of the direction information satisfy the designated condition, a widthwise range and lengthwise range of the movement range may be small (or narrow). Alternatively, if both of the accuracy of the speed information and the accuracy of the direction information do not satisfy the designated condition, the widthwise range and lengthwise range of the movement range may be great (or wide). If the accuracy of the speed information is high and the accuracy of the direction information does not satisfy the designated condition, the widthwise range of the movement range may be narrow (small), and the lengthwise range of the movement range may be great (wide). Alternatively, if the accuracy of the speed information is low and the accuracy of the direction information satisfies the designated condition, the widthwise range of the movement range may be great (wide), and the lengthwise range of the movement range may be narrow (small).

Although it is illustrated in FIG. 10 that the accuracy of the direction information is determined (e.g., step 1009) after determining the accuracy of the speed information (e.g., step 1003), the accuracy of the speed information and the accuracy of the direction information may be simultaneously determined, or the accuracy of the direction information may be first determined, and thereafter the accuracy of the speed information may be determined.

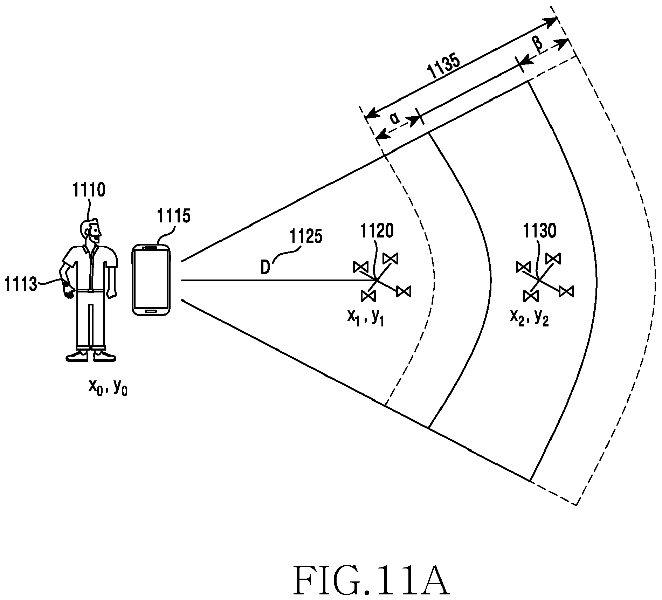

FIG. 11A to FIG. 11D illustrate examples of determining a movement range of a second electronic device, according to an embodiment of the present disclosure.

FIG. 11A illustrates an example of determining a movement range based on speed information.

Referring to FIG. 11A, the second electronic device 501 may be located at a current location 1120 (x₁, y₁) separated by a maintenance distance D 1125 from a current location (xo, yo) of a user 1110. The current location 1120 of the second electronic device 501 may be a location separated by the maintenance distance 1125 from a front side of the user 1110 (e.g., a location of an altitude determined at a location separated by the maintenance distance). The second electronic device 501 may receive information related to a movement of the user 1110 from the first electronic device 1115 carried by the user 1110 and/or the wearable device 1113 worn by the user 1110. The information related to the movement may include speed information of the first electronic device 1115 and/or the wearable device 1113 and accuracy information of the speed information. The second electronic device 501 may determine at least one point (e.g., the movement location 1130) on the basis of the speed information, and may determine a range 1135 from the at least one point at least on the basis of the accuracy information of the speed information.

For example, if the accuracy information of the speed information does not satisfy a designated condition, the second electronic device 501 may determine a lengthwise range (e.g., a front side α or a back side β) of the range 1135 to be wide (great). Alternatively, if the accuracy information of the speed information satisfies the designated condition, the second electronic device 501 may determine the lengthwise direction (e.g., the front side α or the back side β) of the range 1135 to be narrow (small). That is, the greater the error of the speed information (e.g., the lower the accuracy), the wider the range in which the second electronic device 501 is located. On the contrary, if the error of the speed information is small (e.g., the higher the accuracy), the second electronic device 501 may decrease a location selection range for precision. Likewise, if the error of the direction information is great, a direction determination range may be wide, and if the error is small, the direction determination range may be narrow.

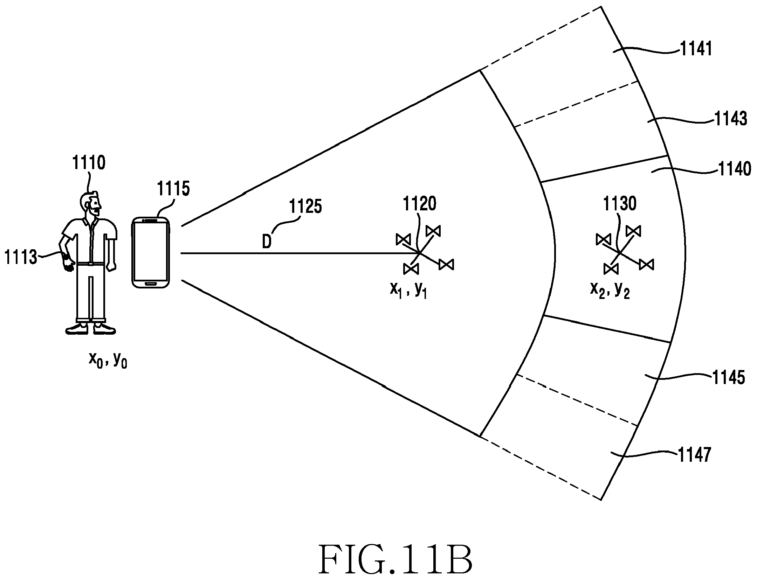

FIG. 11B illustrates an example of determining a movement range on the basis of direction information.

Referring to FIG. 11B, the second electronic device 501 may be located at a current location 1120 (x₁, y₁) separated by a maintenance distance D 1125 from a current location (xo, yo) of a user 1110. The second electronic device 501 may receive information related to a movement of the user 1110 from a first electronic device 1115 carried by the user 1110 and/or a wearable device 1113 worn by the user 1110. The information related to the movement may include direction information of the first electronic device 1115 and/or the wearable device 1113 and accuracy information of the direction information. The second electronic device 501 may determine a point (e.g., a movement location 1130) in at least one direction on the basis of the direction information, and may determine a range 1140 from the at least one point at least on the basis of the accuracy information of the direction information.

For example, if the accuracy information of the direction information does not satisfy the designated condition, the second electronic device 501 may determine a widthwise range (e.g., a first left range 1141, a second left range 1143, a third right range 1145 or a fourth right range 1147) of the range 1140 to be wide (great). Alternatively, if the accuracy of the direction information satisfies the designated condition, the second electronic device 501 may determine the widthwise range (e.g., the second left range 1143 or the right third range 1145) of the range 1140 to be narrow (small). In case of the direction information, the second electronic device 501 may use the GPS direction information if the speed information exceeds a threshold (e.g., about 4km/h), and may use the sensor direction information if the speed information is less than or equal to the threshold. For example, the GPS information may be measured one time at one second, and the sensor information may be measured one time at a shorter time (e.g., about 0.5 second) than 1 second. Therefore, if a speed is less than or equal to a threshold (e.g., about 4km/h), the sensor information may have a higher accuracy than the GPS information.

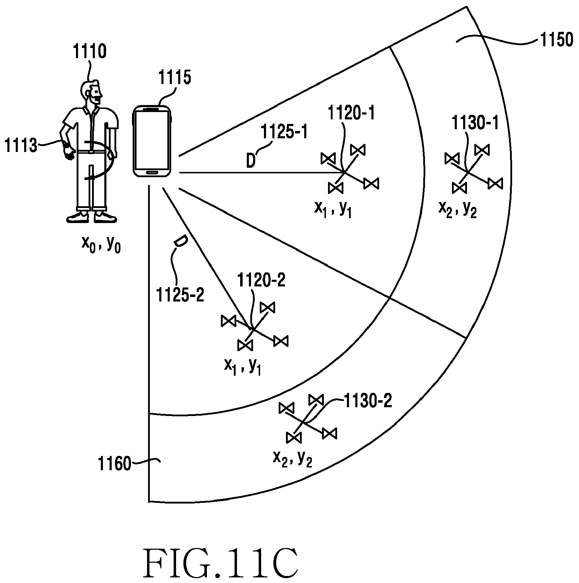

FIG. 11C illustrates an example in which a movement range varies depending on a change in a movement direction.

Referring to FIG. 11C, the second electronic device 501 may be located at a current location 1120-1 or 1120-2 separated by a maintenance distance D 1125-1 or 1125-2 from a current location (xo, yo) of a user 1110. The second electronic device 501 may receive information related to a movement of the user 1110 from the first electronic device 1115 carried by the user 1110 and/or the wearable device 1113 worn by the user 1110. The information related to the movement may include speed information or direction information of the first electronic device 1115 and/or the wearable device 1113 and accuracy information of the speed information or the direction information. The second electronic device 501 may determine a change in the movement direction on the basis of at least one of speed information, direction information, and accuracy information of the speed information or the direction information.

If a current location of the second electronic device 501 at the current location (xo, yo) is the first location 1120-1, the second electronic device 501 may determine a point (e.g., a first movement location 1130-1) from the first location 1120-1 according to the change in the movement direction, and may determine a first movement range 1150 from the at least one point from the first location 1120-1 at least on the basis of accuracy information of the direction information. If a direction of the user 1110 is changed at the current location (xo, yo) of the user 1110, the second electronic device 501 may move from the first location 1120-1 to the second location 1120-2. That is, if the user 1110 changes a direction while moving, the second electronic device 501 may move from the first location 1120-1 to the second location 1120-2 according to the change in the movement direction, may determine a point (e.g., a second movement location 1130-2) from the second location 1120-2, and may determine a second movement range 1160 from the at least one point from the second location 1120-2 at least on the basis of accuracy information of the direction information.

Comparing FIG. 11B and FIG. 11C, the second electronic device 501 may determine the movement range to be wider according to the change in the movement direction or the accuracy of the direction information.

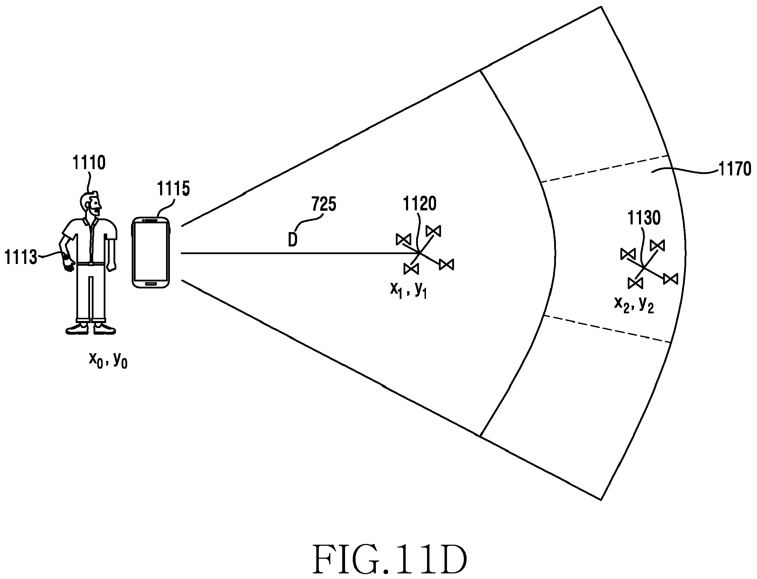

FIG. 11D illustrates an example of determining a movement location according to a movement range.

Referring to FIG. 11D, and similar to FIG. 11A and FIG. 11B, the second electronic device 501 may determine a movement range 1170, and may determine any one point in the movement range 1170 to the movement location 1130. The second electronic device 501 may determine the movement range more accurately when accuracy information of speed information and accuracy information of direction information are high, and may determine the movement location in the determined movement range.

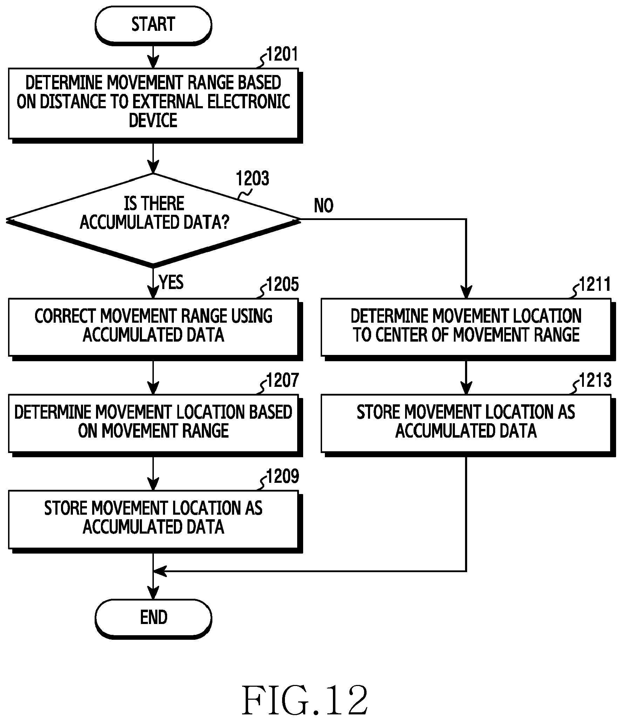

FIG. 12 is a flowchart illustrating a method of determining a movement range in a second electronic device on the basis of a distance with respect to a first electronic device, according to an embodiment of the present disclosure.

Referring to FIG. 12, in step 1201, the second electronic device 501 determines a movement range (e.g., a range in which the second electronic device 501 moves) on the basis of the information related to the movement. The processor 500 may determine the movement range on the basis of the maintenance distance and the information related to the movement of the first electronic device 201 received from the first electronic device 201. The processor 500 may determine the movement range on the basis of the information related to the movement (e.g., speed information, direction information, accuracy information of the speed information or the direction information), and may correct the movement range on the basis of the maintenance distance. Alternatively, the processor 500 may determine a point separated by the maintenance distance from a current location of the second electronic device 501, and may determine the movement range on the basis of the information related to the movement.

In step 1203, the second electronic device 501 determines whether there is accumulated data. The accumulated data may be a previous variation of the information related to the movement. The accumulated data may be acquired by differentiating the speed information, the direction information, the maintenance distance, a variation of the speed information, or a variation of the direction information. The processor 500 may receive the accumulated data from the first electronic device 201 by using a communication module 550 to store the data into the memory module 540. Alternatively, the processor 500 may generate the accumulated data by differentiating the speed information, the direction information, the maintenance distance, the variation of the speed information, or the variation of the direction information, and may store the generated accumulated data into the memory module 540.

The processor 500 performs step 1205 in the presence of the accumulated data, and performs step 1211 in the absence of the accumulated data.

In the presence of the accumulated data, in step 1205, the second electronic device 501 corrects the movement range by using the accumulated data. The accumulated data represents a progress of a change in previous movements of a user. The processor 500 may predict a next change progress on the basis of a previous change process. Therefore, the processor 500 may more accurately correct a movement range by using the accumulated data. For example, the processor 500 may use the accumulated data to correct the movement range so that an area (e.g., a widthwise area or a lengthwise area) of the movement range is decreased.

In step 1207, the second electronic device 501 determines a movement location (e.g., a location to which the second electronic device 501 moves) on the basis of the correct movement range. The processor 500 may determine any one point in the movement range as the movement location on the basis of at least one of an image captured from the camera module 560, information regarding an obstacle on a movement path measured in an ultrasonic sensor, and user information.

In step 1209, the second electronic device 501 stores the determined movement location into the memory module 540 as the accumulated data. The processor 500 may control the movement control module 510 to move the second electronic device 501 to the movement location.

In the absence of the accumulated data, in step 1211, the electronic device 501 determines the movement location as a center of the movement range. The processor 500 may determine any one point in the movement range as the movement location on the basis of at least one of an image captured from the camera module 560, information regarding an obstacle on a movement path measured in an ultrasonic sensor, and user information. After performing step 1211, the processor 500 may perform step 1213 to store the determined movement location into the memory module 540 as the accumulated data. In addition, the processor 500 may control the movement control module 510 to move the second electronic device 501 to the movement location.

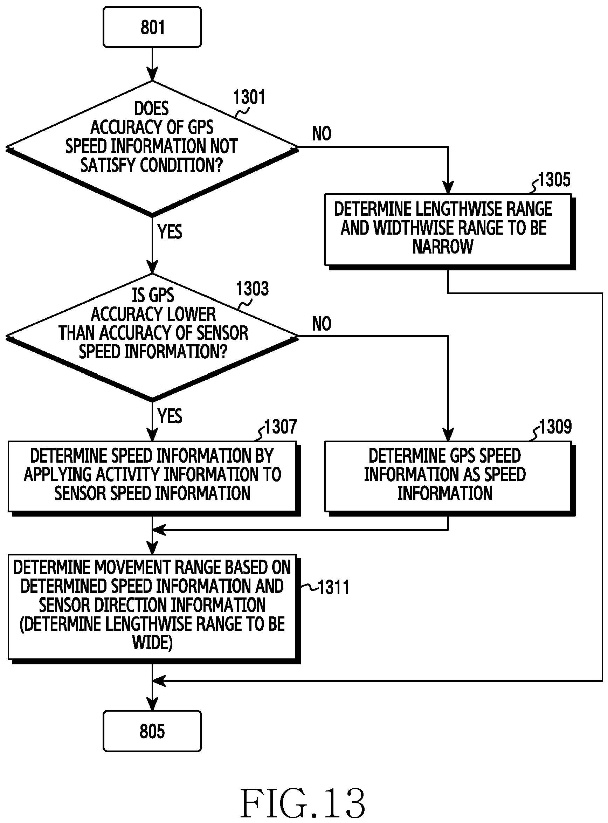

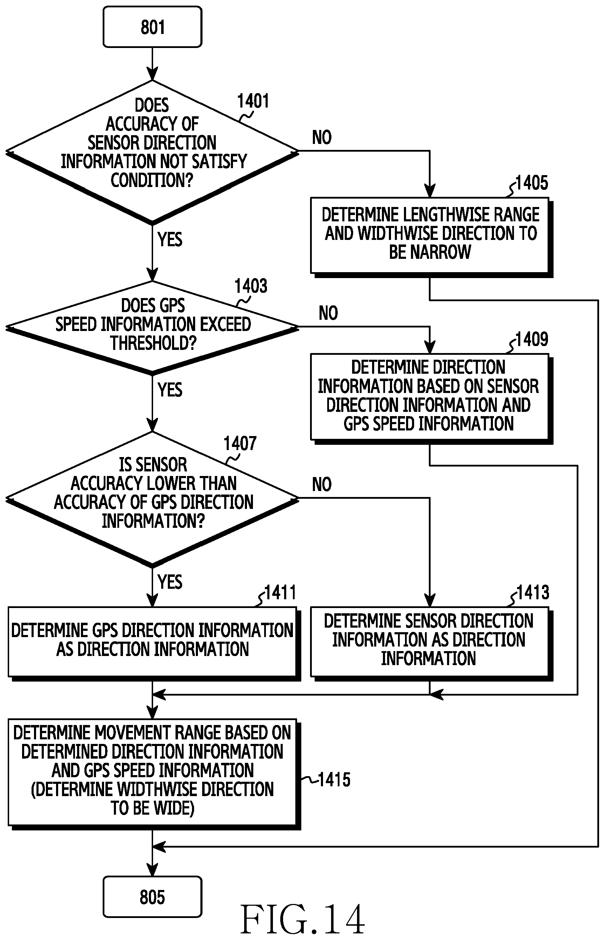

FIG. 13 and FIG. 14 are flowcharts illustrating a method of determining a movement range in a second electronic device, according to an embodiment of the present disclosure. An operation described in FIG. 13 and FIG. 14 is for describing step 803 of FIG. 8 in detail.

FIG. 13 is a flowchart illustrating an operation of determining a movement range on the basis of accuracy of speed information.

Referring to FIG. 13, in step 1301, the second electronic device 501 determines whether accuracy of GPS speed information does not satisfy a designated condition. The processor 500 may use a communication module 550 to receive the information related to the movement from the first electronic device 201. The information related to the movement may include speed information or direction information and accuracy information of the speed information or direction information. The speed information may include GPS speed information and/or sensor speed information. The direction information may include GPS direction information and/or sensor direction information. The processor 500 may use the communication module 550 to further receive the GPS location information, the activity information, or the maintenance distance from the first electronic device 201 in addition to the accuracy information. The activity information may be generated as information indicating activity of the user by processing the GPS speed information, the GPS direction information, the sensor speed information, the sensor direction information, or the sensor acceleration information.

If the accuracy of the GPS speed information does not satisfy a designated condition, the processor 500 performs step 1303, and if the accuracy of the GPS speed satisfies the designated condition, the processor 500 performs step 1305.

If the accuracy of the GPS speed information satisfies the designated condition (e.g., accuracy is greater than or equal to 70%), in step 1305, the second electronic device 501 may determine a lengthwise range and widthwise range for a movement range to be narrow. For example, if the accuracy for the GPS speed information is sufficiently high (e.g., accuracy is greater than or equal to 95%), the processor 500 may determine the movement range by using only the GPS speed information.

If the accuracy of the GPS speed information dose not satisfy the designated condition (e.g., accuracy is less than 50%), in step 1303, the second electronic device 501 determines whether the accuracy of the GPS speed information does not satisfy the designated condition in comparison with the accuracy of the sensor speed information. Since the GPS speed information is information measured in the GPS module 227 of the first electronic device 201 and the sensor speed information is information measured in the sensor module 240 of the first electronic device 201, the accuracy of the GPS speed information may be different from the accuracy of the sensor speed information.

If the accuracy of the GPS speed information does not satisfy the designated condition in comparison with the accuracy of the sensor speed information, the processor 500 performs step 1307, and if the accuracy of the GPS speed information is not lower than the accuracy of the sensor speed information (e.g., the accuracy of the GPS speed information satisfies the designated condition in comparison with the accuracy of the sensor speed information), the processor 500 performs step 1309.

If the accuracy of the GPS speed information does not satisfy the designated condition in comparison with the accuracy of the sensor speed information, in step 1307, the second electronic device 501 determines speed information by applying activity information to sensor speed information. The processor 500 may determine speed information to be used in determining a movement range by further applying the activity information to sensor speed information having a higher accuracy than the GPS speed information.

If the accuracy of the GPS speed information is not lower than the accuracy of the sensor speed information, in step 1309, the second electronic device 501 determines the GPS speed information as the speed information. The processor 500 may determine GPS speed information having a higher accuracy than the sensor speed information as the speed information to be used to determine the movement range.

In step 1311, the second electronic device 501 determines the movement range on the basis of the determined speed information and sensor direction information. In this case, a lengthwise range of the movement range may be determined to be wide since accuracy of the speed information is low. The determined speed information may be speed information determined in step 1307 and step 1309.

FIG. 14 is a flowchart illustrating an operation of determining a movement range on the basis of accuracy of direction information.

Referring to FIG. 14, in step 1401, the second electronic device 501 determines whether the accuracy of sensor direction information does not satisfy a designated condition. The processor 500 may use a communication module 550 to receive the information related to the movement from the first electronic device 201. The information related to the movement may include speed information or direction information and accuracy information of the speed information or direction information. The speed information may include GPS speed information and/or sensor speed information. The direction information may include GPS direction information and/or sensor direction information. The processor 500 may use a communication module 550 to further receive the GPS location information, the activity information, or the maintenance distance from the first electronic device 201 in addition to the accuracy information.

If the accuracy of the sensor direction information does not satisfy a designated condition, the processor 500 performs step 1403, and if the accuracy of the sensor direction information satisfies the designated condition, the processor 500 performs step 1405.

If the accuracy of the sensor direction information satisfies the designated condition, in step 1405, the second electronic device 501 determines a lengthwise range and widthwise direction for a movement range to be narrow. For example, if the accuracy for the sensor direction information is sufficiently high (e.g., accuracy is greater than or equal to 95%), the processor 500 may determine the movement range by using only the sensor direction information.

If the accuracy of the sensor direction information does not satisfy the designated condition, in step 1403, the second electronic device 501 determines whether GPS speed information exceeds a threshold (e.g., about 4km/h). The GPS information may be measured for one second, and the sensor information may be measured for a shorter time (e.g., about 0.5 second) than 1 second. The processor 500 may select a type of information for determining the direction information according to whether the GPS speed information exceeds the threshold. If the GPS speed information exceeds the threshold, the GPS direction information may be used to determine the direction information, and if the GPS speed information is less than or equal to the threshold, the sensor direction information may be used to determine the direction information.

The processor 500 performs step 1407 if the GPS speed information exceeds the threshold, and performs step 1409 if the GPS speed information is less than the threshold.

If the GPS speed information is less than or equal to the threshold, in step 1409, the second electronic device determines direction information on the basis of sensor direction information and GPS speed information. Since the sensor direction information has a low accuracy, the processor 500 may determine direction information to be used to determine a movement range by considering the sensor direction information and the GPS speed information without having to determine the direction information by using only the sensor direction information.

If the GPS speed information exceeds the threshold, in step 1407, the second electronic device determines whether the accuracy of the sensor direction information does not satisfy the designated condition in comparison with the accuracy of the GPS direction information. Since the GPS direction information is information measured in the GPS module 227 of the first electronic device 201 and the sensor direction information is information measured in the sensor module 240 of the first electronic device 201, the accuracy of the GPS direction information may be different from the accuracy of the sensor direction information.

If the accuracy of the sensor direction information does not satisfy the designated condition in comparison with the accuracy of the GPS direction information, the processor 500 performs step 1411, and if the accuracy of the sensor direction information is not lower than the accuracy of the GPS direction information (e.g., the accuracy of the sensor direction information is higher than the accuracy of the GPS direction information), the processor 500 performs step 1413.

If the accuracy of the sensor direction information does not satisfy the designated condition in comparison with the accuracy of the GPS direction information, in step 1411, the second electronic device 501 determines GPS direction information as direction information. The processor 500 may determine GPS direction information having a higher accuracy than the sensor direction information as direction information to be used to determine a movement range.

If the accuracy of the sensor direction information is not lower than the accuracy of the GPS direction information, in step 1413 the second electronic device 501 determines the sensor direction information as the direction information. The processor 500 may determine sensor direction information having a higher accuracy than the GPS direction information as the direction information to be used to determine the movement range.

In step 1415, the second electronic device 501 determines the movement range on the basis of the determined direction information and GPS speed information. In this case, a widthwise range of the movement range may be determined to be wide since accuracy of the direction information is low. The determined direction information may be direction information determined in step 1409, step 1411, and step 1413.

According to an embodiment of the present disclosure, a method of an electronic device includes receiving information related to a movement of an external electronic device from the external electronic device, determining a range of moving the electronic device, at least on the basis of the information related to the movement, determining a location to which the electronic device is moved, at least on the basis of the range, and moving the electronic device to the location.

The information related to the movement may include speed information, direction information, or accuracy information of the speed information or the direction information. The determining of the range in which the electronic device moves may include determining at least one point on the basis of at least one of the speed information or the direction information, and determining an area related to the at least one point on the basis of at least one of the accuracy information of the speed information and the accuracy information of the direction information.

The method may further include determining the at least one point on the basis of the speed information, the direction information, or a current location of the electronic device.

The method may further include receiving information regarding a maintenance distance between the external electronic device and the electronic device from the external electronic device, and determining an area related to the at least one point on the basis of the information regarding the maintenance distance.

The method may further include determining a lengthwise area of a range in which the electronic device moves from a current location of the electronic device on the basis of information regarding accuracy of the speed information, and determining a widthwise area of the range to which the electronic device moves from the current location on the basis of information regarding accuracy of the direction information.

Determining the lengthwise area may include determining the lengthwise area of the range in which the electronic device moves to be narrow when the accuracy of the speed information satisfies a designated condition, and determining the lengthwise area to be wide when the accuracy of the speed information does not satisfy the designated condition.

Determining the widthwise area may include determining the widthwise area in which the electronic device moves to be narrow when the accuracy of the direction information satisfies a designated condition, and determining the widthwise direction to be wide when the accuracy of the direction information does not satisfy the designated condition. Determining the location to which the electronic device moves may include identifying a variation of the information related to the movement, and determining the location on the basis of the identified variation.

The method may further include acquiring data on an image including an object corresponding to the external electronic device by using the at least one camera, determining information related to a movement of the object on the basis of the acquired data, and determining the location on the basis of the information related to the movement of the object.

According to an embodiment of the present disclosure, a non-transitory computer-readable storage medium may include a program for executing a method of an electronic device, the method including receiving information related to a movement of an external electronic device from the external electronic device, determining a range of moving the electronic device, at least on the basis of the information related to the movement, determining a location to which the electronic device is moved, at least on the basis of the range, and moving the electronic device to the location.

The computer-readable storage media may include a hard disk, a floppy disk, magnetic media (e.g., a magnetic tape), optical media (e.g., a compact disc-ROM (CD-ROM), a DVD, magnetic-optic media (e.g., a floptical disk)), or an internal memory. The instruction may include a code created by a compiler or a code executable by an interpreter. The module or programming module may include at least one or more constitutional elements among the aforementioned constitutional elements, or may omit some of them, or may further include additional constitutional elements. Operations performed by a module, programming module, or other constitutional elements may be executed in a sequential, parallel, repetitive, or heuristic manner. At least some of the operations may be executed in a different order or may be omitted, or other operations may be added.

While the present disclosure has been shown and described with reference to certain embodiments, it will be understood by those skilled in the art that various changes in form and details may be made therein without departing from the spirit and scope of the present disclosure, which is defined, not by the detailed description and embodiments, but by the appended claims and their equivalents.

## Claims

1. An electronic device comprising:
a communication module;
a memory storing instructions; and
one or more processors coupled to the communication module, wherein the one or more processors are configured to execute the instructions to:
receive information related to a movement of an external electronic device from the external electronic device by using the communication module;
determine a range of moving the electronic device, at least on the basis of the information related to the movement;
determine a location to which the electronic device is moved, at least on the basis of the range; and
move the electronic device to the location.

2. The electronic device of claim 1,
wherein the information related to the movement comprises at least one of speed information and direction information, and at least one of accuracy information of the speed information and accuracy information of the direction information; and
wherein the one or more processors are further configured to execute the instructions to:
determine at least one point on the basis of at least one of the speed information and the direction information; and
determine an area related to the at least one point on the basis of at least one of the accuracy information of the speed information and the accuracy information of the direction information.

3. The electronic device of claim 2, wherein the one or more processors are further configured to execute the instructions to determine the at least one point on the basis of the speed information, the direction information, and a current location of the electronic device.

4. The electronic device of claim 2, wherein the one or more processors are further configured to execute the instructions to:
receive information regarding a maintenance distance between the external electronic device and the electronic device from the external electronic device by using the communication module; and
determine an area related to the at least one point on the basis of the information regarding the maintenance distance.

5. The electronic device of claim 2, wherein the one or more processors are further configured to execute the instructions to:
determine a lengthwise area of a range in which the electronic device moves from a current location of the electronic device on the basis of information regarding accuracy of the speed information; and
determine a widthwise area of the range to which the electronic device moves from the current location on the basis of information regarding accuracy of the direction information.

6. The electronic device of claim 5, wherein the one or more processors are further configured to execute the instructions to determine the lengthwise area of the range in which the electronic device moves to be narrow when the accuracy of the speed information satisfies a designated value, and determine the lengthwise area to be wide when the accuracy of the speed information does not satisfy the designated value.

7. The electronic device of claim 5, wherein the processor is further configured to execute the instructions to determine the widthwise area in which the electronic device moves to be narrow when the accuracy of the direction information satisfies a designated value, and determine the widthwise direction to be wide when the accuracy of the direction information does not satisfy the designated value.

8. The electronic device of claim 1, wherein the one or more processors are further configured to execute the instructions to:
identify a variation of the information related to the movement; and
determine the location on the basis of the identified variation.

9. The electronic device of claim 8, wherein the one or more processors are further configured to execute the instructions to:
determine the location by applying the variation to the movement range when the variation is identified; and
determine the location to be a center of the movement range when the variation is not identified.

10. The electronic device of claim 1, further comprising
at least one camera,
wherein the one or more processors are coupled to the at least one camera, and are further configured to execute the instructions to:
acquire data on an image comprising an object corresponding to the external electronic device by using the at least one camera;
determine information related to a movement of the object on the basis of the acquired data; and
determine the location on the basis of the information related to the movement of the object.

11. The electronic device of claim 1, wherein the one or more processors are further configured to execute the instructions to:
receive user information from the external electronic device by using the communication module; and
determine the location on the basis of the received user information.

12. A method of an electronic device, comprising:
receiving information related to a movement of an external electronic device from the external electronic device;
determining a range of moving the electronic device, at least on the basis of the information related to the movement;
determining a location to which the electronic device is moved, at least on the basis of the range; and
moving the electronic device to the location.

13. The method of claim 12, wherein the information related to the movement comprises at least one of speed information and direction information and at least one of accuracy information of the speed information and accuracy information of the direction information, wherein the method further comprises:
determining at least one point on the basis of at least one of the speed information and the direction information; and
determining an area related to the at least one point on the basis of at least one of the accuracy information of the speed information and the accuracy information of the direction information.

14. The method of claim 13, further comprising determining the at least one point on the basis of the speed information, the direction information, and a current location of the electronic device.

15. The method of claim 13, further comprising:
receiving information regarding a maintenance distance between the external electronic device and the electronic device from the external electronic device; and
determining an area related to the at least one point on the basis of the information regarding the maintenance distance.
